# EUROPEAN PATENT APPLICATION

(11) **EP 4 277 388 A1**
(43) Date of publication of application: **15.11.2023**
(21) Application number: 21916855.6
(22) Date of filing: 08.01.2021
(51) Int. Cl.: H04W 72/04

(54) **LOCATION INFORMATION TRANSMISSION METHOD AND APPARATUS**

(71) Applicant: Huawei Technologies Co., Ltd., Shenzhen, Guangdong 518129 (CN)
(72) Inventor: LI, Cheng, Shenzhen, Guangdong 518129 (CN); WANG, Yi, Shenzhen, Guangdong 518129 (CN)
(74) Representative: Pfenning, Meinig & Partner mbB
(86) International application number: PCT/CN2021/070976
(87) International publication number: WO 2022/147800

(57) **Abstract**

This application provides a positioning information transmission method and apparatus, and relates to the field of wireless communication technologies, to improve positioning accuracy. In the method, a terminal device may receive first information from a network device. The first information may be used to request capability information of the terminal device. The terminal device may send first capability information to the network device. The first capability information may include capability information of sending a reference signal by the terminal device based on a first bandwidth. The first bandwidth herein is greater than a second bandwidth, the first bandwidth may be used by the terminal device to send the reference signal, and the second bandwidth may be used by the terminal device to receive and/or send communication data. Based on the solution, the terminal device has a capability of sending a reference signal on the first bandwidth. Because the first bandwidth is greater than the second bandwidth, the terminal device may send the reference signal based on the larger bandwidth, so that positioning accuracy of the terminal device can be improved.

## Description

### TECHNICAL FIELD

This application relates to the field of wireless communication technologies, and in particular, to a positioning information transmission method and apparatus.

### BACKGROUND

Currently, positioning in a wireless communication system may be implemented based on a location management function (location management function, LMF) network element of a core network. A base station may measure an uplink relative time of arrival (uplink relative time of arrival, UL RTOA) of a sounding reference signal (sounding reference signal, SRS) of user equipment (user equipment, UE), and report the uplink relative time of arrival to the LMF. The LMF may select a reference base station, and calculate an arrival latency difference between reference signals between base stations and the reference base station. The LMF may position the UE by using an arrival latency difference between a plurality of groups of base stations and the reference base station. However, positioning accuracy usually depends on measurement accuracy of a time of arrival (time of arrival, TOA), and the measurement accuracy of the TOA is limited by a transmission bandwidth of the reference signal. However, in a 5G new radio (new radio, NR) system, there is a large quantity of reduced capability (reduced capability, REDCAP) terminal devices, for example, an Internet of things terminal, a wearable device, or a home smart terminal. Such a REDCAP terminal usually does not have a large demand for data transmission. To reduce energy consumption and improve a battery endurance time, software and hardware complexity is limited, and a system transmission bandwidth that can be processed is small. Therefore, it is difficult to ensure positioning accuracy of the REDCAP terminal.

### SUMMARY

This application provides a positioning information transmission method and apparatus, to improve positioning accuracy.

According to a first aspect, a positioning information transmission method is provided. The method may be performed by a terminal device provided in embodiments of this application, or may be performed by a chip having a function similar to that of a terminal device. In the method, the terminal device may receive first information from a network device. The first information may be used to request capability information of the terminal device. The terminal device may send first capability information to the network device. The first capability information may include capability information of sending a reference signal by the terminal device based on a first bandwidth. The first bandwidth herein is greater than a second bandwidth, the first bandwidth may be used by the terminal device to send the reference signal, and the second bandwidth may be used by the terminal device to receive and/or send communication data.

Based on the solution, the terminal device has a capability of sending a reference signal on the first bandwidth. Because the first bandwidth is greater than the second bandwidth, the terminal device may send the reference signal based on the larger bandwidth, so that a constraint that a bandwidth of the reference signal is limited by a bandwidth of the communication data can be eliminated, and positioning accuracy of the terminal device can be improved. In addition, because the terminal device may send the reference signal based on the first bandwidth, and transmit the communication data based on the second bandwidth, communication data transmission and reference signal transmission can be decoupled, a more flexible network configuration can be implemented, and a network capacity and a data transmission rate of the terminal device can be improved.

In a possible implementation, the terminal device may send second capability information to the network device. The second capability information may include capability information of sending a reference signal by the terminal device based on the second bandwidth.

Based on the solution, the terminal device may alternatively send the reference signal based on the second bandwidth, and the network device may perform an adaptive configuration based on current load and energy consumption information of a user, so that energy consumption of the terminal device can be reduced, system complexity can be reduced, and an endurance time of the terminal device can be increased. In addition, because the terminal device may send reference signals based on the first bandwidth and the second bandwidth, the terminal device may be flexibly indicated to send a reference signal based on a larger bandwidth and/or a smaller bandwidth, and a bandwidth for sending the reference signal by the terminal device may be indicated based on a positioning service requirement.

In a possible implementation, the terminal device may send a switching time to the network device. The switching time is a switching time between sending the reference signal based on the first bandwidth and sending a reference signal based on the second bandwidth by the terminal device. The switching time may include a first switching time and/or a second switching time. The first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

Based on the solution, the terminal device may report, to the network device, the switching time between sending the reference signal based on the first bandwidth and sending the reference signal based on the second bandwidth, so that the network device can determine an appropriate sending periodicity of a reference signal for the terminal device based on the switching time. For example, when the switching time is long, a long reference signal periodicity may be determined for the terminal device, so that it can be avoided that data transmission efficiency is reduced due to frequent switching of the terminal device between the first bandwidth and the second bandwidth, and energy consumption of the terminal device can be reduced.

In a possible implementation, the terminal device may receive second information from a location server. The second information may be used to request positioning capability information of the terminal device. The terminal device may send one or more of the first capability information, the second capability information, and the switching time to the location server.

Based on the solution, the terminal device may report the positioning capability information of the terminal device to the location server, so that the location server can perform a subsequent positioning service operation based on the positioning capability information reported by the terminal device.

In a possible implementation, the terminal device may receive first reference signal configuration information from the network device. The first reference signal configuration information may indicate the terminal device to send the reference signal based on the first bandwidth. The terminal device may send, based on the first reference signal configuration information, the reference signal based on the first bandwidth.

Based on the solution, the terminal device may send the reference signal based on the first bandwidth, so that a sending bandwidth of the reference signal can be increased, to improve positioning accuracy of the terminal device.

In a possible implementation, the terminal device may receive second reference signal configuration information from the network device. The second reference signal configuration information may indicate the terminal device to send the reference signal based on the second bandwidth. The terminal device may send, based on the second reference signal configuration information, the reference signal based on the second bandwidth.

Based on the solution, the terminal device may alternatively send a reference signal based on an indication of the network device and the second bandwidth. In addition, because the network device may indicate the terminal device to send reference signals based on the first bandwidth and the second bandwidth, more flexible resource scheduling can be implemented, different positioning service requirements can be met, accuracy can be improved, and a balance between quality of service, a latency, power consumption, and a data transmission capability can be implemented.

According to a second aspect, an embodiment of this application provides a positioning information transmission method. The method may be performed by a network device, or may be performed by a chip having a function similar to that of a network device. In the method, the network device may send first information to a terminal device. The first information may be used to request capability information of the terminal device. The network device may receive first capability information from the terminal device. The first capability information may include capability information of sending a reference signal by the terminal device based on a first bandwidth. The first bandwidth is greater than a second bandwidth, the first bandwidth herein is used by the terminal device to send the reference signal, and the second bandwidth is used by the terminal device to receive and/or send communication data.

Based on the solution, the terminal device may report the capability information of the terminal device to the network device. The terminal device has a capability of sending a reference signal on the first bandwidth. The network device may indicate the terminal device to send the reference signal based on the first bandwidth. Therefore, the terminal device may send the reference signal based on the larger bandwidth. Because the first bandwidth is greater than the second bandwidth, positioning accuracy of the terminal device can be improved.

In a possible implementation, the network device may receive second capability information from the terminal device. The second capability information may include capability information of sending a reference signal by the terminal device based on the second bandwidth.

Based on the solution, the terminal device also has a capability of sending a reference signal based on the second bandwidth. Therefore, the network device may alternatively indicate the terminal device to send the reference signal on the second bandwidth. Because the second bandwidth is smaller, energy consumption of the terminal device can be reduced. In addition, the network device may alternatively indicate the terminal device to send reference signals based on the first bandwidth and the second bandwidth. Therefore, the terminal device may be flexibly indicated to send a reference signal based on a larger bandwidth and/or a smaller bandwidth, and a bandwidth for sending the reference signal by the terminal device may be indicated based on a positioning service requirement.

In a possible implementation, the network device may receive a switching time from the terminal device. The switching time herein is a switching time between sending the reference signal based on the first bandwidth and sending a reference signal based on the second bandwidth by the terminal device. The switching time may include a first switching time and/or a second switching time. The first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

Based on the solution, the terminal device may report the switching time between sending the reference signal based on the first bandwidth and sending the reference signal based on the second bandwidth, so that the network device can determine an appropriate sending bandwidth and an appropriate sending periodicity of a reference signal for the terminal device based on the switching time.

In a possible implementation, the network device may receive third information from a location server. The third information may be used to request the network device to report reference signal configuration information determined for the terminal device.

Based on the solution, the network device may report, to the location server, the reference signal configuration information determined for the terminal device, so that the location server performs a subsequent positioning operation.

In a possible implementation, the third information may further include indication information. The indication information may indicate the network device to determine first reference signal configuration information for the terminal device, and the first reference signal configuration information may indicate the terminal device to send the reference signal based on the first bandwidth. Alternatively, the indication information may indicate the network device to determine second reference signal configuration information for the terminal device, and the second reference signal configuration information indicates the terminal device to send the reference signal based on the second bandwidth. Alternatively, the indication information may indicate the network device to determine first reference signal configuration information and second reference signal configuration information for the terminal device. The first reference signal configuration information may indicate the terminal device to send the reference signal based on the first bandwidth, and the second reference signal configuration information may indicate the terminal device to send the reference signal based on the second bandwidth.

Based on the solution, the location server may recommend configuration information of the terminal device to the network device based on positioning capability information of the terminal device and a positioning service requirement.

In a possible implementation, the network device may send the first reference signal configuration information to the terminal device. The first reference signal configuration information may indicate the terminal device to send the reference signal based on the first bandwidth.

Based on the solution, the network device may indicate the terminal device to send the reference signal based on the first bandwidth, so that a sending bandwidth of the reference signal can be increased, and positioning accuracy can be improved.

In a possible implementation, the network device may send the second reference signal configuration information to the terminal device. The second reference signal configuration information may indicate the terminal device to send the reference signal based on the second bandwidth.

Based on the solution, the network device may alternatively indicate the terminal device to send the reference signal based on the second bandwidth, so that energy consumption of the terminal device can be reduced. In addition, the network device may alternatively indicate the terminal device to send reference signals based on the first bandwidth and the second bandwidth, so that a flexible network configuration can be implemented, different positioning service requirements can be met, and positioning service quality can be improved, without affecting power consumption and data transmission efficiency of the terminal device.

According to a third aspect, a positioning information transmission method is provided. The method may be performed by a location server, or may be performed by a chip having a function similar to that of a location server. The location server in this embodiment of this application may be a location management function (location management function, LMF) network element. In the method, the location server may receive location request information, where location request information may be used to request location information of a terminal device. The location server may send second information, where the second information is used to request positioning capability information of the terminal device. The location server may receive first capability information from the terminal device. The first capability information may include capability information of sending a reference signal by the terminal device based on a first bandwidth. The first bandwidth is greater than a second bandwidth, the first bandwidth herein is used by the terminal device to send the reference signal, and the second bandwidth is used by the terminal device to receive and/or send communication data.

Based on the solution, the location server can sense the positioning capability information of the terminal, and can flexibly recommend/indicate/configure reference signal resources based on different bandwidths. In addition, the terminal device has a capability of sending a reference signal on the first bandwidth. The first bandwidth is greater than the second bandwidth. Therefore, when the terminal device sends the reference signal based on the larger bandwidth, positioning accuracy of the terminal device can be improved. When the terminal device sends the reference signal based on the smaller bandwidth, system complexity can be reduced, resource usage can be reduced, network efficiency can be improved, and an endurance capability can be improved. In addition, because the terminal device may send the reference signal based on the first bandwidth, and transmit the communication data based on the second bandwidth, positioning resource overheads can be reduced, and a network capacity and a data throughput rate of the terminal device can be improved.

In a possible implementation, the location server may receive second capability information from the terminal device. The second capability information includes capability information of receiving/sending a reference signal by the terminal device based on the second bandwidth.

Based on the solution, the terminal device may alternatively send the reference signal based on the second bandwidth. Because the second bandwidth is less than the first bandwidth, a bandwidth for sending the reference signal is smaller, so that energy consumption of the terminal device can be reduced, and system complexity can also be reduced. In addition, because the terminal device may send reference signals based on the first bandwidth and the second bandwidth, the terminal device may be flexibly indicated to send a reference signal based on a larger bandwidth and/or a smaller bandwidth, and a bandwidth for sending the reference signal by the terminal device may be indicated based on a positioning service requirement.

In a possible implementation, the location server receives a switching time from the terminal device. The switching time is a switching time between sending the reference signal based on the first bandwidth and sending a reference signal based on the second bandwidth by the terminal device. The switching time includes a first switching time and/or a second switching time. The first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

Based on the solution, the location server may determine the switching time between sending the reference signal based on the first bandwidth and sending the reference signal based on the second bandwidth by the terminal device, and may recommend that the network device determines an appropriate sending periodicity of a reference signal for the terminal device.

In a possible implementation, the location server sends third information to a network device, where the third information is used to request the network device to report reference signal configuration information determined for the terminal device.

Based on the solution, the location server may request the network device to report reference signal configuration information determined for the terminal device, so as to perform a subsequent positioning service operation.

In a possible implementation, the third information further includes indication information. The indication information indicates the network device to determine first reference signal configuration information for the terminal device, and the first reference signal configuration information indicates the terminal device to send the reference signal based on the first bandwidth. Alternatively, the indication information indicates the network device to determine second reference signal configuration information for the terminal device, and the second reference signal configuration information indicates the terminal device to send the reference signal based on the second bandwidth. Alternatively, the indication information indicates the network device to determine first reference signal configuration information and second reference signal configuration information for the terminal device. The first reference signal configuration information indicates the terminal device to send the reference signal based on the first bandwidth, and the second reference signal configuration information indicates the terminal device to send the reference signal based on the second bandwidth.

Based on the solution, the location server may recommend configuration information of the terminal device to the network device based on positioning capability information of the terminal device and a positioning service requirement.

According to a fourth aspect, an embodiment of this application provides a positioning information transmission method. The method may be performed by a terminal device, or may be performed by a chip having a function similar to that of a terminal device. In the method, the terminal device may receive fourth information from a network device, where the fourth information may be used to request capability information of the terminal device. The terminal device may send third capability information to the network device. The third capability information includes capability information of receiving a reference signal by the terminal device based on a third bandwidth. The third bandwidth is greater than a fourth bandwidth, the fourth bandwidth herein is used by the terminal device to receive the reference signal, and the fourth bandwidth is used by the terminal device to receive and/or send communication data.

Based on the solution, the terminal device has a capability of receiving the reference signal based on the third bandwidth. Because the third bandwidth is greater than the fourth bandwidth, the terminal device may receive the reference signal based on the larger bandwidth, so that positioning accuracy can be improved. In addition, because the terminal device may receive the reference signal based on the third bandwidth, and transmit the communication data based on the fourth bandwidth, a reference signal receiving capability and a data communication capability can be decoupled, a more flexible network resource configuration can be implemented, positioning resource overheads can be reduced, and a network capacity and a data transmission rate of the terminal device can be improved.

In a possible implementation, the terminal device sends fourth capability information to the network device. The fourth capability information includes capability information of receiving a reference signal by the terminal device based on the fourth bandwidth.

Based on the solution, the terminal device may alternatively receive the reference signal based on the fourth bandwidth. Because the second bandwidth is less than the first bandwidth, a bandwidth for receiving the reference signal is smaller, so that energy consumption of the terminal device can be reduced, system complexity can be reduced, and an endurance time of the terminal device can be increased. In addition, because the terminal device may receive reference signals based on the third bandwidth and the fourth bandwidth, the terminal device may be flexibly indicated to receive a reference signal based on a larger bandwidth and/or a smaller bandwidth, and a bandwidth for receiving the reference signal by the terminal device may be indicated based on a positioning service requirement.

In a possible implementation, the terminal device sends a switching time to the network device. The switching time herein is a switching time between receiving the reference signal based on the third bandwidth and receiving a reference signal based on the fourth bandwidth by the terminal device. The switching time includes a third switching time and/or a fourth switching time. The third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

Based on the solution, the terminal device may report, to the network device, the switching time between receiving the reference signal based on the third bandwidth and receiving the reference signal based on the fourth bandwidth, so that the network device can determine an appropriate receiving periodicity of the reference signal and an appropriate reporting periodicity of measurement information of a reference signal for the terminal device based on the switching time. For example, when the switching time is long, a long measurement information reporting periodicity may be configured, to avoid that data communication efficiency is reduced due to frequent radio frequency link switching of the terminal device.

In a possible implementation, the terminal device receives fifth information from a location server, where the fifth information is used to request positioning capability information of the terminal device. The terminal device sends one or more of the third capability information, the fourth capability information, and the switching time to the location server.

Based on the solution, the terminal device may report the positioning capability information of the terminal device to the location server, so that the location server can perform a subsequent positioning service operation based on the positioning capability information reported by the terminal device.

In a possible implementation, the terminal device receives third reference signal resource configuration information from the location server, where the third reference signal resource configuration information indicates the terminal device to receive the reference signal based on the third bandwidth and/or the fourth bandwidth. The terminal device receives, based on the third reference signal resource configuration information, the reference signal based on the third bandwidth and/or the fourth bandwidth.

Based on the solution, the terminal device may receive the reference signal based on the third bandwidth and/or the fourth bandwidth, so that positioning accuracy can be improved, and different positioning service quality requirements, such as a latency, accuracy, and power consumption, can also be met. In addition, receiving the reference signal based on the third bandwidth may also reduce positioning resource overheads of a network.

According to a fifth aspect, a positioning information transmission method is provided. The method may be performed by a network device, or may be performed by a chip having a function similar to that of a network device. In the method, the network device sends fourth information to a terminal device, where the fourth information is used to request capability information of the terminal device. The network device receives third capability information from the terminal device. The third capability information includes capability information of receiving a reference signal by the terminal device based on a third bandwidth. The third bandwidth is greater than a fourth bandwidth, the third bandwidth is used to receive the reference signal, and the fourth bandwidth is used by the terminal device to receive and/or send communication data.

Based on the solution, the terminal device has a capability of receiving the reference signal based on the third bandwidth. Because the third bandwidth is greater than the fourth bandwidth, the terminal device may receive the reference signal based on the larger bandwidth, so that positioning accuracy can be improved. Different bandwidth capabilities can improve a network design and resource scheduling flexibility and implement better network performance.

In a possible implementation, the network device receives fourth capability information from the terminal device. The fourth capability information includes capability information of receiving a reference signal by the terminal device based on the fourth bandwidth.

Based on the solution, the terminal device may alternatively receive the reference signal based on the fourth bandwidth. Because the second bandwidth is less than the first bandwidth, a bandwidth for receiving the reference signal is smaller, so that energy consumption of the terminal device can be reduced, and system complexity can also be reduced. In addition, because the terminal device may receive reference signals based on the third bandwidth and the fourth bandwidth, the terminal device may be flexibly indicated to receive a reference signal based on a larger bandwidth and/or a smaller bandwidth, and a bandwidth for receiving the reference signal by the terminal device may be indicated based on a positioning service requirement.

In a possible implementation, the network device receives a switching time from the terminal device. The switching time herein is a switching time between receiving the reference signal based on the third bandwidth and receiving a reference signal based on the fourth bandwidth by the terminal device. The switching time includes a third switching time and/or a fourth switching time. The third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

Based on the solution, the terminal device may report, to the network device, the switching time between receiving the reference signal based on the third bandwidth and receiving the reference signal based on the fourth bandwidth. The switching time may be used as a basis for the network device to schedule a resource, and an appropriate receiving periodicity of a reference signal may be determined for the terminal device based on the switching time. For example, when the switching time is long, switching needs to be minimized to avoid affecting data transmission efficiency. When the switching time is short, a short periodicity may be configured, to receive the reference signal based on the third bandwidth, to improve positioning accuracy.

In a possible implementation, the network device receives sixth information from a location server, where the sixth information is used to request the network device to report reference signal resource configuration information. The network device sends third reference signal resource configuration information to the location server, where the third reference signal resource configuration information indicates the terminal device to receive the reference signal based on the third bandwidth and/or the fourth bandwidth.

Based on the solution, the network device may send the third reference signal resource configuration information to the location server, and the location server may indicate the terminal device to receive the reference signal based on the third bandwidth and/or the fourth bandwidth, so that positioning accuracy can be improved, and different positioning service requirements can also be met, thereby improving positioning service quality.

According to a sixth aspect, a positioning information transmission method is provided. The method may be performed by a location server or a chip having a function similar to that of a location server. The location server provided in this embodiment of this application may be an LMF. In the method, the location server receives location request information, where location request information is used to request location information of a terminal device. The location server may send fifth information, where the fifth information is used to request positioning capability information of the terminal device. The location server receives third capability information from the terminal device. The third capability information includes capability information of receiving a reference signal by the terminal device based on a third bandwidth. The third bandwidth is greater than a fourth bandwidth, the fourth bandwidth is only used by the terminal device to receive the reference signal, and the fourth bandwidth is used by the terminal device to receive and send communication data.

Based on the solution, the terminal device has a capability of receiving the reference signal based on the third bandwidth. Because the third bandwidth is greater than the fourth bandwidth, the terminal device may receive the reference signal based on the larger bandwidth, so that positioning accuracy can be improved. In addition, because the terminal device may receive the reference signal based on the third bandwidth, and transmit the communication data based on the fourth bandwidth, a communication function and a positioning function are decoupled, flexible resource scheduling is implemented, and a network capacity and a data throughput rate of the terminal device are improved.

In a possible implementation, the location server receives fourth capability information from the terminal device. The fourth capability information includes capability information of receiving a reference signal by the terminal device based on the fourth bandwidth.

Based on the solution, the terminal device may alternatively receive the reference signal based on the fourth bandwidth. Because the fourth bandwidth is less than the third bandwidth, a bandwidth for receiving the reference signal is smaller. When power consumption of the terminal device is limited, the terminal device may receive the reference signal by using the fourth bandwidth, so that energy consumption of the terminal device can be reduced, and system complexity can also be reduced. In addition, because the terminal device may receive reference signals based on the third bandwidth and the fourth bandwidth, the terminal device may be flexibly indicated to receive a reference signal based on a larger bandwidth and/or a smaller bandwidth, and a bandwidth for receiving the reference signal by the terminal device may be indicated based on a positioning service requirement.

In a possible implementation, the location server receives a switching time from the terminal device. The switching time herein is a switching time between receiving the reference signal based on the third bandwidth and receiving a reference signal based on the fourth bandwidth by the terminal device. The switching time includes a third switching time and/or a fourth switching time. The third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

Based on the solution, the terminal device may report, to the network device, the switching time between receiving the reference signal based on the third bandwidth and receiving the reference signal based on the fourth bandwidth. The switching time may be used as a basis for the network device to schedule a resource, and an appropriate receiving periodicity of a reference signal may be determined for the terminal device based on the switching time.

In a possible implementation, the location server sends sixth information to the network device, where the sixth information is used to request the network device to report third reference signal resource configuration information. The location server receives the third reference signal resource configuration information from the network device, where the third reference signal resource configuration information indicates the terminal device to receive the reference signal based on the third bandwidth and/or the fourth bandwidth. The location server sends the third reference signal resource configuration information to the terminal device.

Based on the solution, the location server may indicate, based on the third reference signal resource configuration information reported by the network device, the terminal device to receive the reference signal based on the third bandwidth and/or the fourth bandwidth, so that positioning accuracy can be improved, and different positioning service requirements can also be met, thereby improving positioning service quality.

According to a seventh aspect, a communication apparatus is provided. The apparatus may include modules/units configured to perform the first aspect and the possible implementations of the first aspect, or may include modules/units configured to perform the second aspect and the possible implementations of the second aspect, or may include modules/units configured to perform the third aspect and the possible implementations of the third aspect, or may include modules/units configured to perform the fourth aspect and the possible implementations of the fourth aspect, or may include modules/units configured to perform the fifth aspect and the possible implementations of the fifth aspect, or may include modules/units configured to perform the sixth aspect and the possible implementations of the sixth aspect. For example, a processing unit and a communication unit are included.

For example, when the apparatus is configured to perform the first aspect and the possible implementations of the first aspect, the communication unit is configured to receive first information from a network device, where the first information is used to request capability context information of the communication apparatus; the processing unit is configured to determine first capability information, where the first capability information includes capability information of sending a reference signal by the communication apparatus based on a first bandwidth, the first bandwidth is greater than a second bandwidth, the first bandwidth is used by the communication apparatus to send the reference signal, and the second bandwidth is used by the communication apparatus to receive and send communication data; and the communication unit is further configured to send the first capability information to the network device.

In a possible implementation, the processing unit is further configured to determine second capability information, where the second capability information includes capability information of sending a reference signal by the communication apparatus based on the second bandwidth; and the communication unit is further configured to send the second capability information to the network device.

In a possible implementation, the processing unit is further configured to determine a switching time, where the switching time is a switching time between sending the reference signal based on the first bandwidth and sending the reference signal based on the second bandwidth by the communication apparatus, the switching time includes a first switching time and/or a second switching time, the first switching time is a switching time in which the communication apparatus switches from sending the reference signal based on the first bandwidth to sending the reference signal based on the second bandwidth, and the second switching time is a switching time in which the communication apparatus switches from sending the reference signal based on the second bandwidth to sending the reference signal based on the first bandwidth; and the communication unit is further configured to send the switching time to the network device.

In a possible implementation, the communication unit is further configured to: receive second information from a location server, where the second information is used to request positioning capability information of the communication apparatus; and send one or more of the first capability information, the second capability information, and the switching time to the location server.

In a possible implementation, the communication unit is further configured to: receive first reference signal configuration information from the network device, where the first reference signal configuration information indicates the communication apparatus to send the reference signal based on the first bandwidth; and send, based on the first reference signal configuration information, the reference signal based on the first bandwidth.

In a possible implementation, the communication unit is further configured to: receive second reference signal configuration information from the network device, where the second reference signal configuration information indicates the communication apparatus to send the reference signal based on the second bandwidth; and send, based on the second reference signal configuration information, the reference signal based on the second bandwidth.

For example, when the apparatus is configured to perform the second aspect and the possible implementations of the second aspect, the processing unit is configured to generate first information, where the first information is used to request capability context information of a terminal device; the communication unit is configured to send the first information to the terminal device; and the communication unit is further configured to receive first capability information from the terminal device, where the first capability information includes capability information of sending a reference signal by the terminal device based on a first bandwidth, the first bandwidth is greater than a second bandwidth, the first bandwidth is used by the terminal device to send the reference signal, and the second bandwidth is used by the terminal device to receive and send communication data.

In a possible implementation, the communication unit is further configured to receive second capability information from the terminal device, where the second capability information includes capability information of sending a reference signal by the terminal device based on the second bandwidth.

In a possible implementation, the communication unit is further configured to receive a switching time from the terminal device, where the switching time is a switching time between sending the reference signal based on the first bandwidth and sending a reference signal based on the second bandwidth by the terminal device. The switching time includes a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

In a possible implementation, the communication unit is further configured to receive third information from a location server, where the third information is used to request the communication apparatus to report reference signal configuration information determined for the terminal device.

In a possible implementation, the third information further includes indication information. The indication information indicates the communication apparatus to determine first reference signal configuration information for the terminal device, and the first reference signal configuration information indicates the terminal device to send the reference signal based on the first bandwidth. Alternatively, the indication information indicates the communication apparatus to determine second reference signal configuration information for the terminal device, and the second reference signal configuration information indicates the terminal device to send the reference signal based on the second bandwidth. Alternatively, the indication information indicates the communication apparatus to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

In a possible implementation, the communication unit is further configured to send the first reference signal configuration information to the terminal device, where the second reference signal configuration information indicates the terminal device to send the reference signal based on the first bandwidth.

In a possible implementation, the communication unit is further configured to send the second reference signal configuration information to the terminal device, where the second reference signal configuration information indicates the terminal device to send the reference signal based on the second bandwidth.

For example, when the apparatus is configured to perform the third aspect and the possible implementations of the third aspect, the communication unit is configured to receive location request information, where the location request information is used to request location information of a terminal device; the processing unit is configured to generate second information, where the second information is used to request positioning capability information of the terminal device; the communication unit is further configured to send the second information; and the communication unit is further configured to receive first capability information from the terminal device, where the first capability information includes capability information of sending a reference signal by the terminal device based on a first bandwidth, the first bandwidth is greater than a second bandwidth, the first bandwidth is used by the terminal device to send the reference signal, and the second bandwidth is used by the terminal device to receive and send communication data.

In a possible implementation, the communication unit is further configured to receive second capability information from the terminal device, where the second capability information includes capability information of sending a reference signal by the terminal device based on the second bandwidth.

In a possible implementation, the communication unit is further configured to receive a switching time from the terminal device, where the switching time is a switching time between sending the reference signal based on the first bandwidth and sending a reference signal based on the second bandwidth by the terminal device. The switching time includes a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

In a possible implementation, the communication unit is further configured to send third information to a network device, where the third information is used to request the network device to report reference signal configuration information determined for the terminal device.

In a possible implementation, the third information further includes indication information. The indication information indicates the network device to determine first reference signal configuration information for the terminal device, and the first reference signal configuration information indicates the terminal device to send the reference signal based on the first bandwidth. Alternatively, the indication information indicates the network device to determine second reference signal configuration information for the terminal device, and the second reference signal configuration information indicates the terminal device to send the reference signal based on the second bandwidth. Alternatively, the indication information indicates the network device to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

For example, when the apparatus is configured to perform the fourth aspect and the possible implementations of the fourth aspect, the communication unit is configured to receive fourth information from a network device, where the fourth information is used to request capability context information of the communication apparatus; the processing unit is configured to determine third capability information, where the third capability information includes capability information of receiving a reference signal by the communication apparatus based on a third bandwidth, the third bandwidth is greater than a fourth bandwidth, the fourth bandwidth is used by the communication apparatus to receive the reference signal, and the fourth bandwidth is used by the communication apparatus to receive and send communication data; and the communication unit is further configured to send the third capability information to the network device.

In a possible implementation, the processing unit is further configured to determine fourth capability information, where the fourth capability information includes capability information of receiving a reference signal by the communication apparatus based on the fourth bandwidth; and the communication unit is further configured to send the fourth capability information to the network device.

In a possible implementation, the processing unit is further configured to determine a switching time, where the switching time is a switching time between receiving the reference signal based on the third bandwidth and receiving a reference signal based on the fourth bandwidth by the communication apparatus, the switching time includes a third switching time and/or a fourth switching time, the third switching time is a switching time in which the communication apparatus switches from receiving the reference signal based on the third bandwidth to receiving the reference signal based on the fourth bandwidth, and the fourth switching time is a switching time in which the communication apparatus switches from receiving the reference signal based on the fourth bandwidth to receiving the reference signal based on the third bandwidth; and the communication unit is further configured to send the switching time to the network device.

In a possible implementation, the communication unit is further configured to: receive fifth information from a location server, where the fifth information is used to request positioning capability information of the communication apparatus; and send one or more of the third capability information, the fourth capability information, and the switching time to the location server.

In a possible implementation, the communication unit is further configured to: receive third reference signal resource configuration information from a location server, where the third reference signal resource configuration information indicates the communication apparatus to receive the reference signal based on the third bandwidth and/or the fourth bandwidth; and receive, based on the third reference signal resource configuration information, the reference signal based on the third bandwidth and/or the fourth bandwidth.

For example, when the apparatus is configured to perform the fifth aspect and the possible implementations of the fifth aspect, the processing unit is configured to generate fourth information, where the fourth information is used to request capability context information of a terminal device; the communication unit is configured to send the fourth information to the terminal device; and the communication unit is further configured to receive third capability information from the terminal device, where the third capability information includes capability information of receiving a reference signal by the terminal device based on a third bandwidth, the third bandwidth is greater than a fourth bandwidth, the third bandwidth is used to receive the reference signal, and the fourth bandwidth is used by the terminal device to receive and send communication data.

In a possible implementation, the communication unit is further configured to receive fourth capability information from the terminal device, where the fourth capability information includes capability information of receiving a reference signal by the terminal device based on the fourth bandwidth.

In a possible implementation, the communication unit is further configured to receive a switching time from the terminal device, where the switching time is a switching time between receiving the reference signal based on the third bandwidth and receiving a reference signal based on the fourth bandwidth by the terminal device. The switching time includes a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

In a possible implementation, the communication unit is further configured to: receive sixth information from a location server, where the sixth information is used to request the communication apparatus to report reference signal resource configuration information determined for the terminal device; and send third reference signal resource configuration information to the location server, where the third reference signal resource configuration information indicates the terminal device to receive the reference signal based on the third bandwidth and/or the fourth bandwidth.

For example, when the apparatus is configured to perform the sixth aspect and the possible implementations of the sixth aspect, the communication unit is configured to receive location request information, where the location request information is used to request location information of a terminal device; the processing unit is configured to generate fifth information, where the fifth information is used to request positioning capability information of the terminal device; the communication unit is further configured to send the fifth information; and the communication unit is further configured to receive third capability information from the terminal device, where the third capability information includes capability information of receiving a reference signal by the terminal device based on a third bandwidth, the third bandwidth is greater than a fourth bandwidth, the fourth bandwidth is only used by the terminal device to receive the reference signal, and the fourth bandwidth is used by the terminal device to receive and send communication data.

In a possible implementation, the communication unit is further configured to receive fourth capability information from the terminal device, where the fourth capability information includes capability information of receiving the reference signal by the terminal device based on the fourth bandwidth.

In a possible implementation, the communication unit is further configured to receive a switching time from the terminal device, where the switching time is a switching time between receiving the reference signal based on the third bandwidth and receiving a reference signal based on the fourth bandwidth by the terminal device. The switching time includes a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

In a possible implementation, the communication unit is further configured to: send sixth information to a network device, where the sixth information is used to request the network device to report third reference signal resource configuration information; receive the third reference signal resource configuration information from the network device, where the third reference signal resource configuration information indicates the terminal device to receive the reference signal based on the third bandwidth and/or the fourth bandwidth; and send the third reference signal resource configuration information to the terminal device.

According to an eighth aspect, a chip is provided. The chip includes a logic circuit and a communication interface.

In a design, the communication interface may be configured to input first information of a terminal device. The logic circuit may be configured to determine first capability information based on the first information. The communication interface may be further configured to output the first capability information.

In a design, the logic circuit may be configured to determine first information. The communication interface may be configured to output the first information and input first capability information of a terminal device.

In a design, the communication interface is configured to input location request information. The logic circuit may be configured to determine second information based on the location request information. The communication interface may be further configured to output the second information and input first capability information of a terminal device.

In a design, the communication interface may be configured to input fourth information. The logic circuit may be configured to determine third capability information based on the fourth information. The communication interface is further configured to output the third capability information.

In a design, the logic circuit may be configured to determine fourth information. The communication interface may be configured to output the fourth information and input third capability information of a terminal device.

In a design, the communication interface is configured to input location request information. The logic circuit may be configured to determine fifth information based on the location request information. The communication interface is further configured to output the fifth information and input third capability information of a terminal device.

According to a ninth aspect, a communication apparatus is provided. The apparatus may include a processor and a transceiver. The transceiver may be configured to perform a communication operation in the foregoing aspects and the possible implementations of the foregoing aspects, and the processor may be configured to perform an operation other than the communication operation in the foregoing aspects and the possible implementations of the foregoing aspects.

In a possible implementation, the communication apparatus may further include a memory. The memory may be located inside the apparatus, or may be located outside the apparatus and connected to the apparatus.

In a possible implementation, the memory may be integrated with the processor.

According to a tenth aspect, a communication system is provided. The system may include the foregoing at least one location server and at least one network device.

According to an eleventh aspect, a computer-readable storage medium is provided. The computer-readable storage medium stores instructions. When the instructions are run on a computer, the computer is enabled to perform the foregoing aspects and the possible implementations of the foregoing aspects.

According to a twelfth aspect, this application provides a computer program product storing instructions. When the computer program product runs on a computer, the computer is enabled to perform the foregoing aspects and the possible implementations of the foregoing aspects.

In addition, for beneficial effect of the seventh aspect to the twelfth aspect, refer to the beneficial effect shown in the first aspect and the sixth aspect.

### BRIEF DESCRIPTION OF DRAWINGS

FIG. 1 is a communication system to which a positioning information transmission method is applicable according to an embodiment of this application;
FIG. 2 is a schematic diagram of a first bandwidth and a second bandwidth according to an embodiment of this application;
FIG. 3 is an example flowchart of a positioning information transmission method according to an embodiment of this application;
FIG. 4A is an example flowchart of a positioning information transmission method according to an embodiment of this application;
FIG. 4B is a schematic diagram of a scenario of a positioning information transmission method according to an embodiment of this application;
FIG. 5 is an example flowchart of a positioning information transmission method according to an embodiment of this application;
FIG. 6 is a schematic diagram of a first bandwidth and a second bandwidth according to an embodiment of this application;
FIG. 7 is an example flowchart of a positioning information transmission method according to an embodiment of this application;
FIG. 8 is an example flowchart of a positioning information transmission method according to an embodiment of this application;
FIG. 9A and FIG. 9B are an example flowchart of a positioning information transmission method according to an embodiment of this application;
FIG. 10 is a schematic diagram of a communication apparatus according to an embodiment of this application; and
FIG. 11 is a schematic diagram of a communication apparatus according to an embodiment of this application.

### DESCRIPTION OF EMBODIMENTS

The following describes some terms in embodiments of this application, to facilitate understanding of a person skilled in the art.

(1) AREDCAP terminal device is a terminal device with a reduced capability designed to improve terminal endurance in a 5G NR network, having a low data processing capability, a small signal receiving and sending bandwidth, a low battery capacity, and a small quantity of receiving and sending antennas.

(2) A switching time refers to a radio frequency link switching time (RF Switch Time). When a radio frequency link receives and sends signals on different bandwidths, a center frequency may need to be readjusted, or different radio frequency links may need to be switched. This requires specific time overheads. The switching time in this application may be a switching time between sending a reference signal based on a first bandwidth and sending a reference signal based on a second bandwidth by a terminal device.

(3) A reference signal may include an uplink sounding reference signal (sounding reference signal, SRS) and a downlink positioning reference signal (positioning reference signal, PRS). An SRS is mainly used for uplink positioning. In a 5G NR system, a network device measures a TOA of an SRS sent by a terminal device, to implement terminal positioning. The SRS sent by the terminal device is configured by the network device in a serving cell. An SRS resource is at a terminal level. In other words, different terminal devices are configured with different SRS resources. The PRS is mainly used for downlink positioning. In the 5G NR system, the terminal device measures TOAs of PRSs of different network devices, to implement positioning of the terminal device. The PRS is at a cell level. In other words, all terminal devices in a cell measure a same PRS. PRS resources between different cells are independently configured by a network device of each serving cell. Optionally, the reference signal mentioned in embodiments of this application may alternatively be a CRS, a CSI-RS, or the like. Without loss of generality, in embodiments of this application, the SRS and the PRS are separately used as examples for description.

With reference to the accompanying drawings, the following describes the technical solutions provided in embodiments of this application.

To improve positioning accuracy of a terminal device, embodiments of this application provide a positioning information transmission method and apparatus. In the method, in addition to a data processing bandwidth of a REDCAP terminal device, a radio frequency link that is used to only perform a positioning function bandwidth is separately designed. In the following descriptions, the positioning function bandwidth is referred to as a first bandwidth, the data processing bandwidth is referred to as a second bandwidth, and the second bandwidth is greater than the first bandwidth. A radio frequency link having a first bandwidth capability may be independently designed, or an existing radio frequency link of the second bandwidth of the REDCAP terminal device may be reused. To be specific, an existing data processing radio frequency link of the second bandwidth of the REDCAP terminal is extended to a radio frequency link of the first bandwidth. A positioning radio frequency link of the first bandwidth has a capability of sending an uplink positioning reference signal and/or receiving a downlink positioning reference signal. Optionally, the positioning radio frequency link of the first bandwidth may not perform functions such as receiving and sending of communication data and measurement, so that complexity and power consumption can be reduced.

The terms "system" and "network" may be used interchangeably in embodiments of this application. "A plurality of' means two or more, and another quantifier is similar to this. "And/or" is an association relationship for describing associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one of (at least one of) ..." means one or any combination of subsequent associated objects. For example, "at least one of A, B, and C" includes A, B, C, AB, AC, BC, or ABC.

The technical solutions in embodiments of this application may be applied to various communication systems, for example, a long term evolution (long term evolution, LTE) system, a worldwide interoperability for microwave access (worldwide interoperability for microwave access, WiMAX) communication system, a future 5th generation (5th Generation, 5G) system such as a new radio access technology (new radio access technology, NR), and a future communication system such as a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

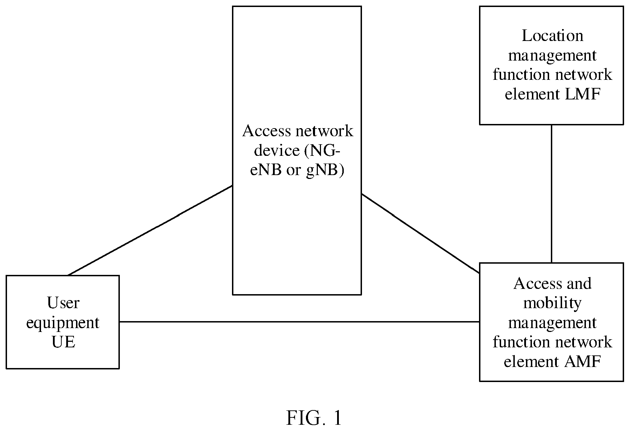

For ease of understanding embodiments of this application, a communication system shown in FIG. 1 is first used as an example to describe in detail a communication system applicable to embodiments of this application. FIG. 1 is a schematic diagram of a communication system applicable to a communication method according to an embodiment of this application. As shown in FIG. 1, the communication system 100 includes a terminal device 101, a network device 102, an access and mobility management function network element AMF 103, and a location management function network element LMF 104.

The following describes in detail functions of the network elements or devices in the communication system in this embodiment of this application.

The terminal device may also be referred to as user equipment (user equipment, UE), a mobile station (mobile station, MS), a mobile terminal (mobile terminal, MT), or the like, and is a device that provides voice and/or data connectivity to a user. The terminal device may be a REDCAP terminal device. For example, the terminal device may include a handheld device that has a wireless connection function or a vehicle-mounted device. Currently, the terminal device may be a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device is shown by using UE as an example, and the terminal device is not limited.

The network device (access network, AN) provides a wireless access service for the terminal device. The network device is a device, in the communication system, that enables the terminal device to access a wireless network. The network device is a node in a radio access network, and may also be referred to as a base station or a radio access network (radio access network, RAN) node (or device). Currently, some examples of the network device include a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like.

The access and mobility management function network element AMF may be configured to manage access control and mobility of the terminal device. In an actual application, the access and mobility management function network element includes a mobility management function of a mobility management entity (mobility management entity, MME) in a network framework in long term evolution (long term evolution, LTE), and further includes an access management function. Specifically, the access and mobility management function network element may be responsible for registration of the terminal device, mobility management, a tracking area update procedure, reachability detection, selection of a session management function network element, mobility state transition management, and the like. For example, in 5G, the access and mobility management function network element may be an AMF (access and mobility management function) network element, for example, as shown in FIG. 1. In future communication, for example, in 6G, the access and mobility management function network element may still be an AMF network element or have another name. This is not limited in this application. When the access and mobility management function network element is an AMF network element, the AMF may provide a Namf service.

The location management function network element LMF may be configured to determine a location of the LTE, obtain downlink location measurement or location estimation from the UE, or the like. For example, in 5G, the location management function (location management function, LMF) network element is shown in FIG. 1. In a future communication system, for example, in 6G, the location management function network element may still be an LMF network element or have another name. This is not limited in this application.

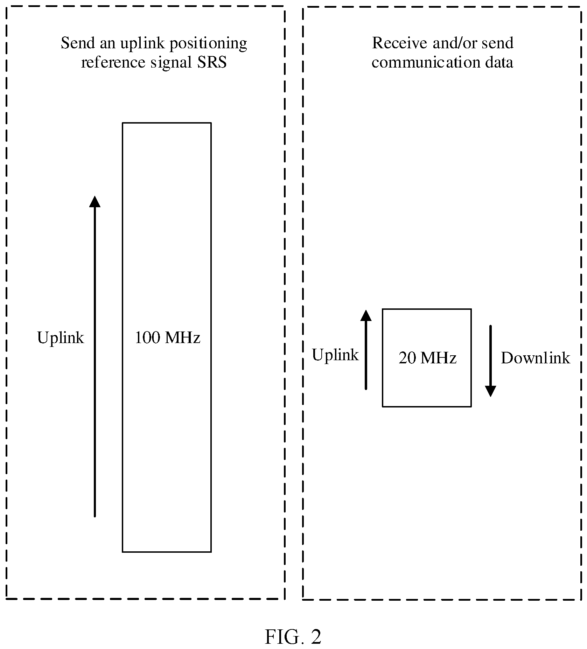

FIG. 2 is a schematic diagram of a first bandwidth and a second bandwidth of a terminal device according to an embodiment of this application. It is assumed that the second bandwidth is 20 MHz, and the terminal device may transmit uplink data, for example, a video, an image, and a text, based on the second bandwidth, or may receive downlink data, for example, a video, an image, and a text, based on the second bandwidth. In this embodiment of this application, the first bandwidth used to perform a positioning function is provided for the terminal device. The first bandwidth is greater than the second bandwidth. It is assumed that the first bandwidth is 100 MHz, and the terminal device may transmit an SRS based on the 100 MHz bandwidth, thereby improving positioning accuracy. The first bandwidth may also be used to send uplink data and receive downlink data. Optionally, the first bandwidth may alternatively be used to transmit only the SRS, and the first bandwidth cannot be used to send uplink data or receive downlink data.

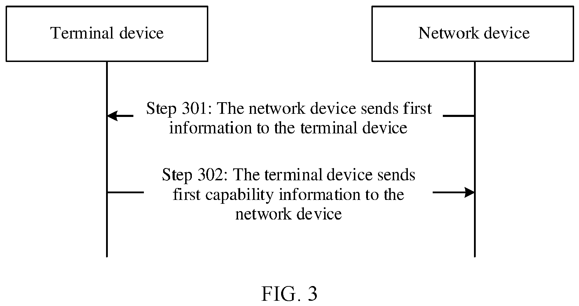

FIG. 3 is an example flowchart of a positioning information transmission method according to an embodiment of this application. The method may include the following steps.

Step 301: A network device sends first information to a terminal device.

The terminal device herein may establish uplink synchronization with the network device by using a random access procedure, and establish a radio resource control (radio resource control, RRC) connection to the network device by using an RRC setup procedure. For a terminal device that performs initial access, the network device does not have capability information of the terminal device. Therefore, the network device may send the first information to the terminal device to request the capability information of the terminal device. The first information may indicate the terminal device to report the capability information of the terminal device. The first information may be a user equipment capability enquiry (UE Capability Enquiry) message, or may be a newly defined message.

Step 302: The terminal device sends first capability information to the network device.

The first capability information herein may include capability information of sending an SRS by the terminal device based on a first bandwidth. Optionally, the first capability information may include a frequency band for sending the SRS, a radio frequency bandwidth of the SRS, such as the first bandwidth, and a subcarrier spacing supported by a link for sending the SRS.

In a possible implementation, the terminal device may further report second capability information. The second capability information includes capability information of sending an SRS by the terminal device based on a second bandwidth. Optionally, the second capability information may include a frequency band for sending the SRS, a radio frequency bandwidth of the SRS, such as the second bandwidth, and a subcarrier spacing supported by a link for sending the SRS.

In another possible implementation, the terminal device may further report a switching time. The switching time may include a first switching time and/or a second switching time. The first switching time is a switching time in which the terminal device switches from sending the SRS based on the first bandwidth to sending an SRS based on the second bandwidth. The second switching time is a switching time in which the terminal device switches from sending the SRS based on the second bandwidth to sending the SRS based on the first bandwidth. The terminal device may report one or more of the first switching time and the second switching time to the network device.

Optionally, the terminal device may also send a plurality of types of capability information to the terminal device. For the plurality of types of capability information, refer to capability information in the conventional technology. For example, the terminal device may upload a data transmission capability of the terminal device, where information such as a frequency band supported during data transmission, an uplink/downlink data transmission bandwidth, and a supported subcarrier spacing may be included. This embodiment of this application only focuses on describing capability information related to the positioning information transmission method, and other capability information is not described again.

The terminal device may add the reported capability information in a user equipment capability information (UE Capability Information) message. For example, the terminal device may add one or more of the first capability information, the second capability information, and the switching time to LTE capability information.

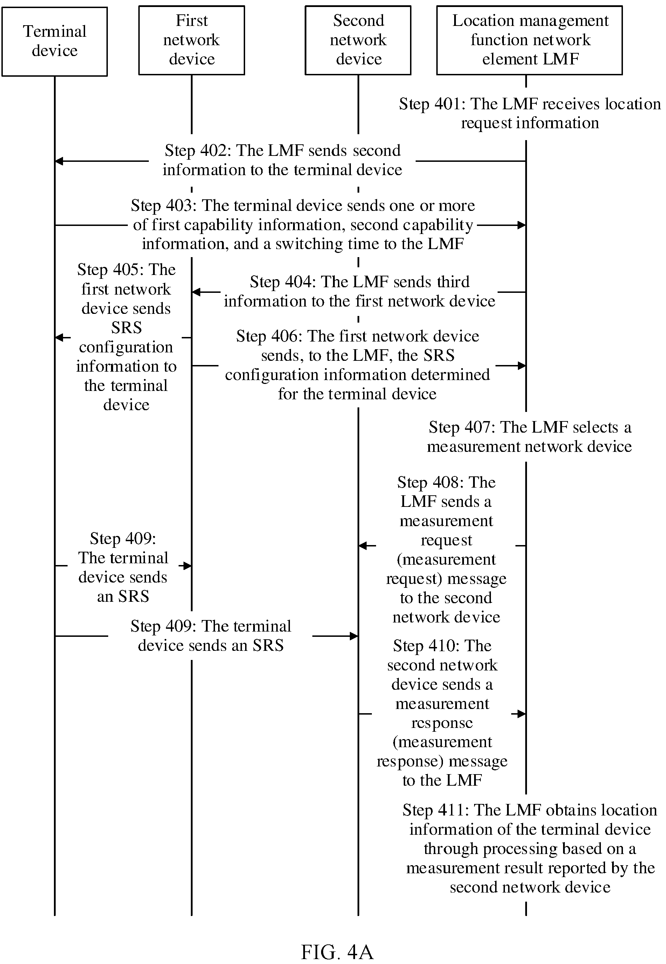

Based on the solution, the terminal device may have a capability of sending a reference signal based on a large bandwidth. Therefore, a transmission bandwidth of the SRS is also greater than a current data transmission bandwidth, so that positioning accuracy of the terminal device can be improved. With reference to FIG. 4A, the following describes a method for transmitting the SRS by the terminal device based on the large bandwidth.

FIG. 4A is an example flowchart of a positioning information transmission method according to an embodiment of this application. The method may include the following steps.

Step 401: An LMF receives location request information.

The location request information herein may be used to request location information of the terminal device. The location request information may be sent by the terminal device, or may be initiated by a third-party server that wants to obtain the location information of the terminal device. The location request information may be a location service request (location service request) message, or may be a newly defined message.

Step 402: The LMF sends second information to the terminal device.

The second information herein may be used to request positioning capability information of the terminal device. The LMF may send the second information to the terminal device by using a long term evolution positioning protocol (long term evolution positioning protocol, LPP) message. The second information may be an LPP request capabilities (request capabilities) message, or may be a newly defined message.

Step 403: The terminal device sends one or more of the first capability information, the second capability information, and the switching time to the LMF.

The terminal device may feed back the positioning capability information of the terminal device to the LMF by using an LPP message. For example, the terminal device may feed back the positioning capability information of the terminal device to the LMF by using an LPP provide capabilities (provide capabilities) message.

In an example, if the terminal device has only a capability of sending an SRS based on the first bandwidth, the terminal device may send the first capability information to the LMF. Optionally, the terminal device may send the switching time to the LMF. If the terminal device has only a capability of sending an SRS based on the second bandwidth, the terminal device may send the second capability information to the LMF.

If the terminal device has both a capability of sending an SRS based on the first bandwidth and a capability of sending an SRS based on the second bandwidth, the terminal device may report the first capability information and the second capability information to the LMF. Optionally, the terminal device may report the switching time to the LMF.

In another example, if the terminal device has a capability of sending an SRS based on the first bandwidth and a capability of sending an SRS based on the second bandwidth, the terminal device may alternatively send the first capability information to the LMF, and does not report the second capability information. Optionally, the terminal device may send the switching time to the LMF. If the terminal device has only a capability of sending an SRS based on the second bandwidth, the terminal device may send the second capability information to the LMF.

Step 404: The LMF sends third information to a first network device.

The first network device may be a network device that is providing a service for the terminal device. The third information herein may be used to request the first network device to report SRS configuration information determined for the terminal device, or the third information may indicate the first network device to determine SRS configuration information for the terminal device. The third information may be a positioning information request (positioning information request) message of an NR positioning protocol annex (NR positioning protocol annex, NRPPa), or may be a newly defined message.

Optionally, the third information may include indication information. The indication information herein may indicate SRS configuration information recommended by the LMF for the first network device. For example, the indication information may indicate the first network device to determine second SRS configuration information for the terminal device. The second SRS configuration information indicates the terminal device to send the SRS based on the second bandwidth. Alternatively, the indication information may indicate the first network device to determine first SRS configuration information for the terminal device. The first SRS configuration information may indicate the terminal device to send the SRS based on the first bandwidth. Alternatively, the indication information may indicate the first network device to determine first SRS configuration information and second SRS configuration information for the terminal device.

In an example, the LMF may determine a quality of service (quality of service, QoS) or latency requirement of a location request based on the location request information received in step 401, and the LMF may determine the recommended SRS configuration information for the first network device based on the QoS or latency requirement of the location request. For example, if the QoS requirement of the location request is high, a positioning accuracy requirement is high. In this case, the LMF may recommend, to the first network device, configuration information for sending an SRS based on the first bandwidth. If the QoS requirement of the location request is low, a positioning accuracy requirement is low. In this case, the LMF may recommend, to the first network device, configuration information for sending an SRS based on the second bandwidth. Alternatively, if the latency requirement of the location request is high, the LMF needs to feed back the location information of the terminal device in a short periodicity. In this case, the LMF may recommend, to the first network device, configuration information for sending an SRS based on the second bandwidth. If the latency requirement of the location request is low, the LMF does not need to feed back the location information of the terminal device in a short periodicity, and the LMF may feed back the location information of the terminal device in a long periodicity. In this case, the LMF may recommend, to the first network device, configuration information for sending an SRS based on the first bandwidth. Alternatively, if the latency requirement of the location request is high, and the QoS requirement of the location request is high, the LMF may recommend, to the first network device, configuration information for sending SRSs based on the first bandwidth and the second bandwidth.

In another example, the LMF may recommend the SRS configuration information to the first network device based on the positioning capability information of the terminal device. For example, if the terminal device supports sending of an SRS based on the first bandwidth, the LMF may recommend, to the first network device, configuration information for sending the SRS based on the first bandwidth. For another example, if the terminal device supports sending of an SRS based on the second bandwidth but does not support sending of an SRS based on the first bandwidth, the LMF may recommend, to the first network device, configuration information for sending an SRS based on the second bandwidth. For another example, if the terminal device supports sending of an SRS based on the first bandwidth, and the terminal device also supports sending of an SRS based on the second bandwidth, the LMF may recommend, to the first network device, one or more of configuration information for sending an SRS based on the first bandwidth, configuration information for sending an SRS based on the second bandwidth, and configuration information for sending SRSs based on the first bandwidth and the second bandwidth.

Step 405: The first network device sends the SRS configuration information to the terminal device.

The SRS configuration information herein may include at least one of the first SRS configuration information and the second SRS configuration information.

In an example, the first network device may determine the SRS configuration information for the terminal device based on the SRS configuration information recommended by the LMF. For example, if the indication information indicates to determine the first SRS configuration information for the terminal device, the first network device may determine the first SRS configuration information for the terminal device, and send the first SRS configuration information to the terminal device. If the indication information indicates to determine the second SRS configuration information for the terminal device, the first network device may determine the second SRS configuration information for the terminal device, and send the second SRS configuration information to the terminal device. If the indication information indicates to determine the first SRS configuration information and the second SRS configuration information for the terminal device, the first network device may determine the first SRS configuration information and the second SRS configuration information for the terminal device.

In another example, the first network device may determine the SRS configuration information for the terminal device based on the capability information of the terminal device. For example, if the terminal device supports sending of the SRS based on the first bandwidth, the first network device may determine the first SRS configuration information for the terminal device, and send the first SRS configuration information to the terminal device. If the terminal device supports sending of an SRS only based on the second bandwidth, the first network device may determine the second SRS configuration information for the terminal device, and send the second SRS configuration information to the terminal device. If the terminal device supports sending of SRSs based on the first bandwidth and the second bandwidth, the first network device may determine one or more of the first SRS configuration information and the second SRS configuration information for the terminal device, and send one or more of the first SRS configuration information and the second SRS configuration information to the terminal device.

In a possible implementation, the first SRS configuration information determined by the first network device for the terminal device may include information such as a periodicity, a bandwidth, a combsize (combsize), an offset, and a cyclic shift. The second SRS configuration information determined by the first network device for the terminal device may include information such as a periodicity, a bandwidth, a combsize, an offset, and a cyclic shift. Optionally, if the switching time reported by the terminal device is long, for example, is greater than or equal to a preset threshold, the periodicity in the first SRS configuration information determined by the first network device may be larger and cannot be excessively small, for example, may be greater than or equal to a preset periodicity. A main reason is that if a time for switching between the first bandwidth and the second bandwidth by the terminal device is long, and the periodicity in the first SRS configuration information is set to a small value, the terminal device may frequently switch between the first bandwidth and the second bandwidth, and energy consumption of the terminal device may be increased.

For information included in the first SRS configuration information and/or the second SRS configuration information, refer to the conventional technology. The information included in the first SRS configuration information and/or the second SRS configuration information is not exhaustively listed in this embodiment of this application. It should be understood that the terminal device may send the SRS on a corresponding time-frequency resource and bandwidth based on the first SRS configuration information and/or the second SRS configuration information. For example, in this embodiment of this application, the terminal device may send, based on the first SRS configuration information, the SRS on the corresponding time-frequency resource based on the first bandwidth.

The first network device may send the SRS configuration information to the terminal device by using an RRC message. For example, the SRS configuration information may be sent to the terminal device by using an RRC reconfiguration (RRC reconfiguration) message. Alternatively, the SRS configuration information may be sent to the terminal device by using a newly defined message.

Step 406: The first network device sends, to the LMF, the SRS configuration information determined for the terminal device.

The first network device may send the SRS configuration information to the LMF by using a positioning information response (positioning information response) message. If the first network device determines the first SRS configuration information for the terminal device, the first network device may send the first SRS configuration information to the LMF. If the first network device determines the second SRS configuration information for the terminal device, the first network device may send the second SRS configuration information to the LMF. If the first network device determines the first SRS configuration information and the second SRS configuration information for the terminal device, the first network device may send the first SRS configuration information and the second SRS configuration information to the LMF.

It should be understood that step 405 and step 406 do not indicate an execution sequence. Step 405 may be performed before step 406, or step 406 may be performed before step 405, or step 405 and step 406 may be performed at the same time. This is not limited in this application.

Step 407: The LMF selects a measurement network device.

The measurement network device herein may be the first network device that determines the SRS configuration information for the terminal device in step 405, or may be another network device. For ease of distinguishing, the measurement network device is referred to as a second network device below.

Step 408: The LMF sends a measurement request (measurement request) message to the second network device.

The measurement request message herein may include the SRS configuration information of the terminal device. The SRS configuration information may include one or more of the first SRS configuration information and the second SRS configuration information.

Step 409: The terminal device sends the SRS.

If the terminal device receives the first SRS configuration information from the first network device in step 405, the terminal device may send the SRS based on the first bandwidth. If the terminal device receives the second SRS configuration information from the first network device in step 405, the terminal device may send the SRS based on the second bandwidth. If the terminal device receives the first SRS configuration information and the second SRS configuration information from the first network device in step 405, the terminal device may separately send SRSs based on the first bandwidth and the second bandwidth. It should be understood that the SRS sent by the terminal device may be received by one or more second network devices, or may be received by the first network device that is providing the service for the terminal device.

Step 410: The second network device sends a measurement response (measurement response) message to the LMF.

The measurement response message may include a measurement result obtained by the second network device through measurement based on the SRS sent by the terminal device. The measurement result may be one or more of reference signal received power (reference signal received power, RSRP), reference signal received quality (reference signal received quality, RSRQ), a signal to interference plus noise ratio (signal to interference plus noise ratio, SINR), a relative time of arrival (relative time of arrival, RTOA), a time of arrival (time of arrival, TOA), and an angle of arrival (angle of arrival, AOA) of the SRS. Alternatively, the measurement result may be a value obtained through quantization based on one or more of the RSRP, the RSRQ, the SINR, the RTOA, and the AOA of the SRS.

In a possible implementation, if the first network device configures the first SRS configuration information for the terminal device, the terminal device sends the SRS based on the first bandwidth, and the second network device also measures the SRS sent based on the first bandwidth, to obtain a measurement result. If the first network device configures the second SRS configuration information for the terminal device, the terminal device sends the SRS based on the second bandwidth, and the second network device also measures the SRS sent based on the second bandwidth, to obtain a measurement result. If the first network device configures the first SRS configuration information and the second SRS configuration information for the terminal device, the terminal device sends the SRS based on the first bandwidth, and sends the SRS based on the second bandwidth; and the second network device also measures the SRS sent based on the first bandwidth, and measures the SRS sent based on the second bandwidth, to separately obtain a measurement result of the SRS on the first bandwidth and a measurement result of the SRS on the second bandwidth.

Step 411: The LMF obtains the location information of the terminal device through processing based on the measurement result reported by the second network device.

The LMF may obtain the location information of the terminal device through processing by using an uplink angle of arrival (uplink angle of arrival, UL-AOA) positioning technology or an uplink time difference of arrival (uplink time difference of arrival, UL-TDOA) positioning technology. It should be noted that the LMF may alternatively determine the location information of the terminal device by using another positioning technology. This is not specifically limited in this application.

In a possible implementation, location information of the terminal device that is obtained through resolving based on measurement information of the SRS on the first bandwidth may be used as reference information for performing location resolving based on measurement information of the SRS on the second bandwidth. Details are described below.

For example, the QoS requirement of the location request is high, and the latency requirement of the location request is high. Therefore, the first SRS configuration information for sending the SRS based on the first bandwidth and the second SRS configuration information for sending the SRS based on the second bandwidth may be determined for the terminal device. An SRS sending periodicity in the first SRS configuration information is 200 ms, and an SRS sending periodicity in the second SRS configuration information may be 20 ms. The terminal device may send, based on the SRS sending periodicity in the first SRS configuration information, the SRS based on the first bandwidth, and send, based on the SRS sending periodicity in the second SRS configuration information, the SRS based on the second bandwidth. The LMF may receive the measurement result of the SRS on the first bandwidth and the measurement result of the SRS on the second bandwidth from the second network device. It should be understood that, the SRS sending periodicity in the second SRS configuration information is shorter, so that it is possible that the LMF may receive only the measurement result of the SRS on the second bandwidth from the second network device. The LMF may obtain the location information of the terminal device through processing based on the measurement results of the SRS.

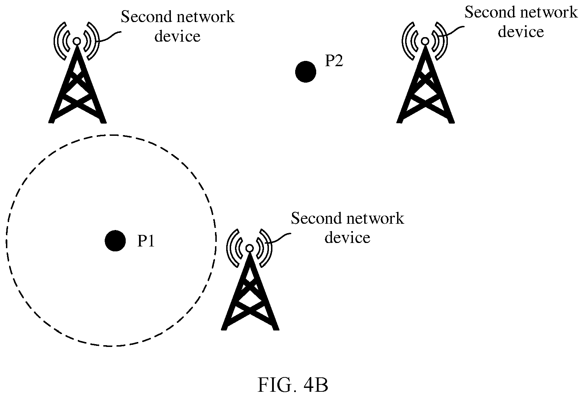

As shown in FIG. 4B, P1 is location information of the terminal device obtained by the terminal device through processing based on the measurement result of the SRS on the first bandwidth, and P2 is location information of the terminal device obtained by the terminal device through processing based on the measurement result of the SRS on the second bandwidth. It can be learned from FIG. 4B that a location difference between P1 and P2 is large, and it may be considered that an error of P2 is large. In this case, the LMF may search for the terminal device around P1 by using P1 as reference information, and obtain the location information of the terminal device around P1 through processing by using the measurement result of the SRS on the second bandwidth. A search range in which the terminal device is searched around P1 may be pre-specified. A circle is used as an example for description in FIG. 4B. During implementation, the search range may alternatively be a rectangular range or the like. This is not specifically limited in this application.

Based on the solution, P1 is obtained based on the measurement result of the SRS on the first bandwidth. Therefore, accuracy of P1 is higher. Therefore, when the LMF resolves the location information of the terminal device based on the measurement result of the SRS on the second bandwidth, the location information of the terminal device with higher accuracy may be used as a reference to limit a search range, so as to improve positioning accuracy of the SRS on the small bandwidth. In addition, because the periodicity of sending the SRS based on the second bandwidth is shorter, the latency requirement of the location request can also be met.

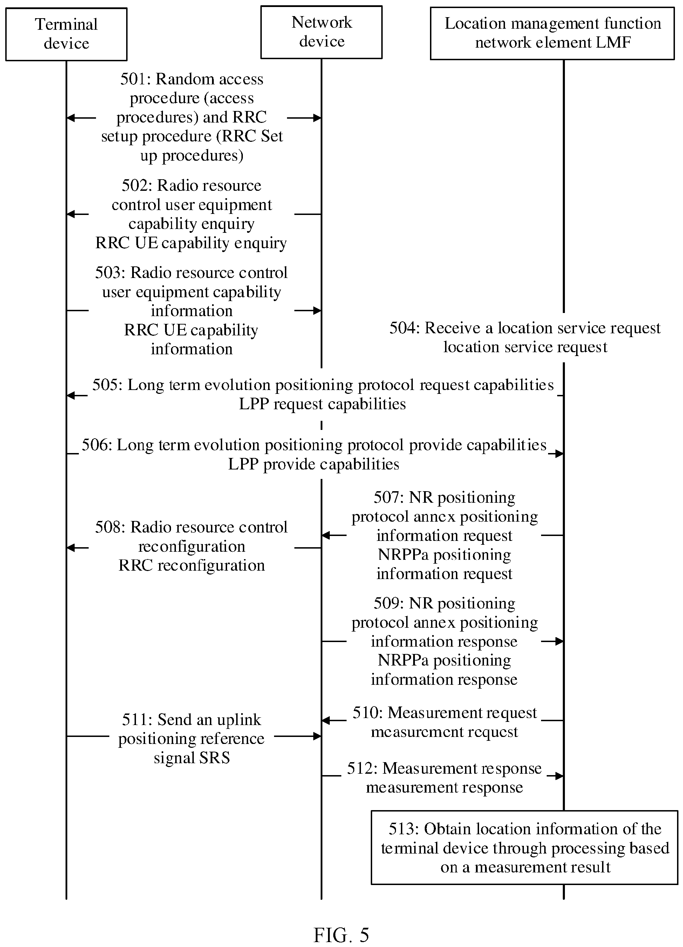

The following describes the positioning information transmission method with reference to a specific embodiment. As shown in FIG. 5, the following steps may be included.

Step 501: The terminal device establishes uplink synchronization with the network device by using the random access procedure (access procedure), and establishes the RRC connection to the network device by using the RRC setup procedure (RRC Setup procedure).

Step 502: The network device sends an RRC UE capability enquiry to the terminal device.

The RRC UE capability enquiry may indicate the terminal device to report the capability information of the terminal device.

Step 503: The terminal device sends RRC UE capability information to the network device.

The RRC UE capability information may include one or more of the first capability information, the second capability information, and the switching time.

Step 504: The LMF receives a location service request.

The location service request may be used to request the location information of the terminal device.

Step 505: The LMF sends LPP request capabilities to the terminal device.

The LPP request capabilities may indicate the terminal device to report the positioning capability information of the terminal device.

Step 506: The terminal device sends LPP provide capabilities to the LMF.

The LPP provide capability may include one or more of the first capability information, the second capability information, and the switching time.

Step 507: The LMF sends an NRPPa positioning information request to the network device.

The NRPPa positioning information request may be used to request SRS configuration information determined by the network device for the terminal device. Optionally, the NRPPa positioning information request may alternatively include the SRS configuration information recommended by the LMF for the network device.

Step 508: The network device sends an RRC reconfiguration to the terminal device.

The RRC reconfiguration may include the SRS configuration information determined by the network device for the terminal device. The SRS configuration information herein may include the first SRS configuration information and/or the second SRS configuration information.

Step 509: The network device sends an NRPPa positioning information response to the LMF.

The NRPPa positioning information response herein may include the SRS configuration information determined by the network device for the terminal device. The SRS configuration information may include the first SRS configuration information and/or the second SRS configuration information.

The network device may first perform step 508 and then perform step 509, or first perform step 509 and then perform step 508, or perform step 508 and step 509 at the same time. This is not specifically limited in this application.

Step 510: The LMF sends a measurement request to the network device.

The LMF may select a network device used for measurement. In the embodiment shown in FIG. 5, an example in which the network device that determines the SRS configuration information for the terminal device in step 508 is the network device used for measurement is used for description. It should be understood that the network device selected by the LMF for measurement may alternatively be another network device (not shown in the figure).

Step 511: The terminal device sends the SRS.

The terminal device may send the SRS based on the SRS configuration information. For example, the terminal device may send, based on the first SRS configuration information, an SRS based on the first bandwidth, and/or send, based on the second SRS configuration information, an SRS based on the second bandwidth.

Step 512: The network device sends a measurement response to the LMF.

The measurement response may carry the measurement result obtained based on the SRS sent by the terminal device.

Step 513: The LMF obtains the location information of the terminal device through processing based on the measurement result.

Based on step 501 to step 513, the terminal device may send the SRS based on the first bandwidth, a sending bandwidth of the SRS is increased. Therefore, TOA accuracy can also be improved, thereby improving positioning accuracy of the terminal device.

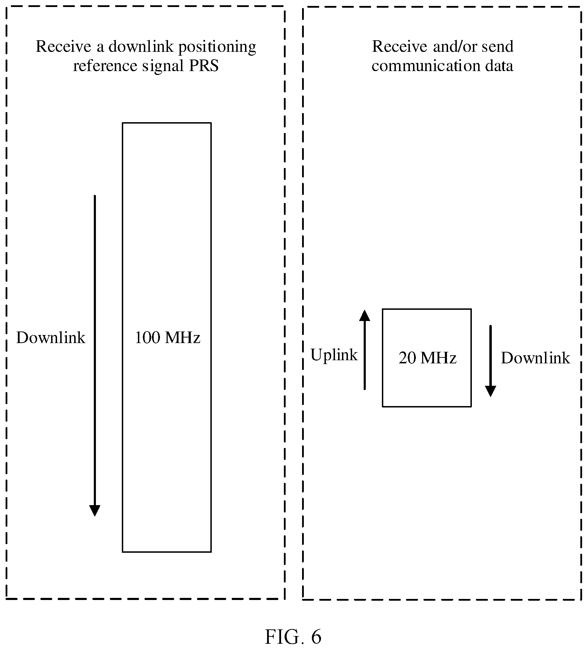

FIG. 6 is a schematic diagram of a third bandwidth and a fourth bandwidth of a terminal device according to an embodiment of this application. It is assumed that the fourth bandwidth is 20 MHz. The terminal device may transmit uplink data based on the fourth bandwidth, or may receive downlink data based on the fourth bandwidth. In this embodiment of this application, the third bandwidth used to perform a positioning function is provided for the terminal device. The third bandwidth is greater than the fourth bandwidth. It is assumed that the third bandwidth is 100 MHz, and the terminal device may receive a PRS based on the 100 MHz bandwidth, thereby improving positioning accuracy. The first bandwidth may also be used to send uplink data and receive downlink data. Optionally, the third bandwidth may alternatively be used to receive only the PRS, and the third bandwidth cannot be used to send uplink data or receive downlink data. It should be noted that the third bandwidth may be the same as or different from the first bandwidth, and the fourth bandwidth may be the same as or different from the second bandwidth. This is not specifically limited in this application.

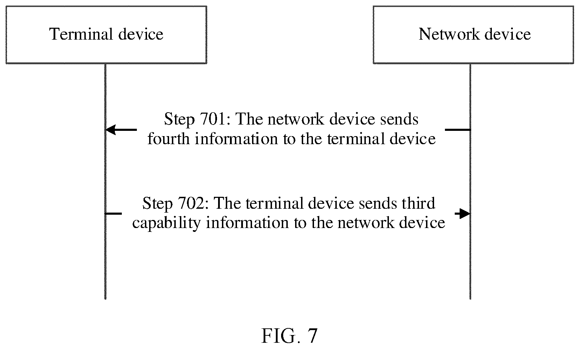

FIG. 7 is an example flowchart of a positioning information transmission method according to an embodiment of this application. The method may include the following steps.

Step 701: A network device sends fourth information to a terminal device.

The terminal device herein may establish uplink synchronization with the network device by using a random access procedure, and establish an RRC connection to the network device by using an RRC setup procedure. For a terminal device that performs initial access, the network device does not have capability information of the terminal device. Therefore, the network device may send the fourth information to the terminal device to request the capability information of the terminal device. The fourth information may indicate the terminal device to report the capability information of the terminal device. The fourth information may be a user equipment capability enquiry (UE Capability Enquiry) message, or may be a newly defined message.

Step 702: The terminal device sends third capability information to the network device.

The third capability information herein may include capability information of receiving a PRS by the terminal device based on a third bandwidth. Optionally, the third capability information may include a frequency band for receiving the PRS, a radio frequency bandwidth of the PRS, such as the third bandwidth, and a subcarrier spacing supported by a link for receiving the PRS.

In a possible implementation, the terminal device may further report fourth capability information. The fourth capability information includes capability information of receiving a PRS by the terminal device based on a fourth bandwidth. Optionally, the fourth capability information may include a frequency band for receiving the PRS, a radio frequency bandwidth of the PRS, such as the fourth bandwidth, and a subcarrier spacing supported by a link for receiving the PRS.

In another possible implementation, the terminal device may further report a switching time. The switching time may include a third switching time and/or a fourth switching time. The third switching time is a switching time in which the terminal device switches from receiving the PRS based on the third bandwidth to receiving a PRS based on the fourth bandwidth. The fourth switching time is a switching time in which the terminal device switches from receiving the PRS based on the fourth bandwidth to receiving the PRS based on the third bandwidth. The terminal device may report one or more of the third switching time and the fourth switching time to the network device.

Optionally, the terminal device may also send a plurality of types of capability information to the terminal device. For the plurality of types of capability information, refer to capability information in the conventional technology. For example, the terminal device may upload a data transmission capability of the terminal device, where information such as a frequency band supported during data transmission, an uplink/downlink data transmission bandwidth, and a supported subcarrier spacing may be included. This embodiment of this application only focuses on describing capability information related to the positioning information transmission method, and other capability information is not described again.

The terminal device may add the reported capability information in a user equipment capability information (UE Capability Information) message. For example, the terminal device may add one or more of the third capability information, the fourth capability information, and the switching time to LTE capability information.

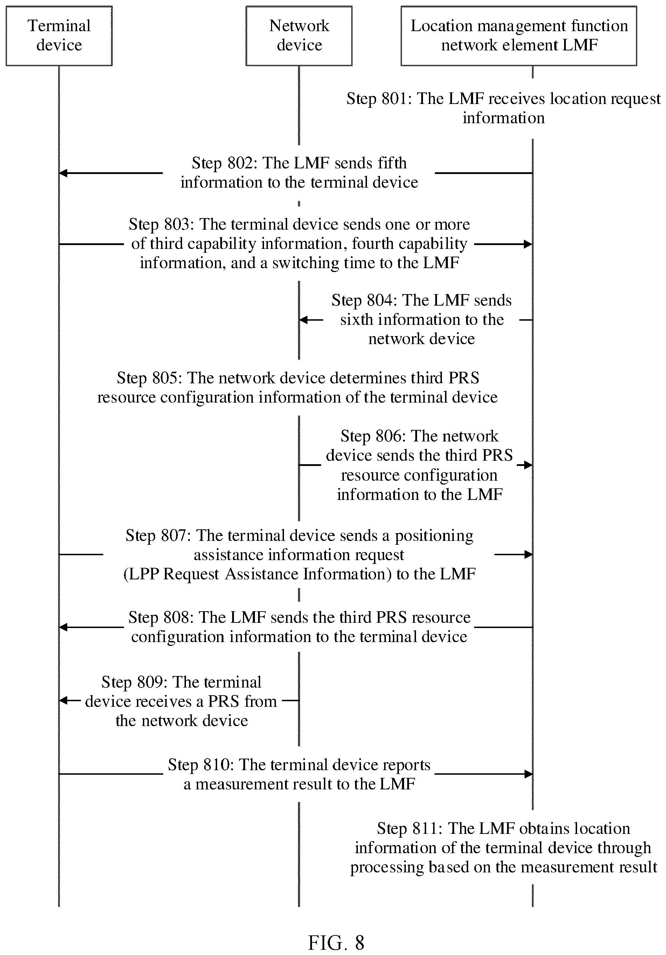

Based on the solution, the terminal device may have a capability of receiving a PRS based on a large bandwidth. Therefore, a transmission bandwidth of the PRS is also greater than a current data transmission bandwidth, so that positioning accuracy of the terminal device can be improved. With reference to FIG. 8, the following describes a method for receiving the PRS by the terminal device based on the large bandwidth.

FIG. 8 is an example flowchart of a positioning information transmission method according to an embodiment of this application. The method may include the following steps.

Step 801: An LMF receives location request information.

The location request information herein may be used to request location information of the terminal device. The location request information may be sent by the terminal device, or may be initiated by a third-party server that wants to obtain the location information of the terminal device. The location request information may be a location service request (location service request) message, or may be a newly defined message.

Step 802: The LMF sends fifth information to the terminal device.

The fifth information herein may be used to request positioning capability information of the terminal device. The LMF may send the fifth information to the terminal device by using an LPP message. The fifth information may be an LPP request capabilities message, or may be a newly defined message.

Step 803: The terminal device sends one or more of the third capability information, the fourth capability information, and the switching time to the LMF.

The terminal device may feed back the positioning capability information of the terminal device to the LMF by using an LPP message. For example, the terminal device may feed back the positioning capability information of the terminal device to the LMF by using an LPP provide capabilities message.

In an example, if the terminal device has only a capability of receiving a PRS based on the third bandwidth, the terminal device may send the third capability information to the LMF. Optionally, the terminal device may send the switching time to the LMF. If the terminal device has only a capability of receiving a PRS based on the fourth bandwidth, the terminal device may send the fourth capability information to the LMF.

If the terminal device has both a capability of receiving a PRS based on the third bandwidth and a capability of receiving a PRS based on the fourth bandwidth, the terminal device may report the third capability information and the fourth capability information to the LMF. Optionally, the terminal device may report the switching time to the LMF.

In another example, if the terminal device has a capability of receiving a PRS based on the third bandwidth and a capability of receiving a PRS based on the fourth bandwidth, the terminal device may alternatively send the third capability information to the LMF, and does not report the fourth capability information. Optionally, the terminal device may send the switching time to the LMF. If the terminal device has only a capability of receiving a PRS based on the fourth bandwidth, the terminal device may send the fourth capability information to the LMF.

Step 804: The LMF sends sixth information to the network device.

The sixth information herein may be used to request the network device to report determined PRS resource configuration information. The sixth information may be a transmission and reception point (transmission and reception point, TRP) information (information) request (request) message.

Step 805: The network device determines third PRS resource configuration information.

The third PRS resource configuration information may indicate the terminal device to receive the PRS based on the third bandwidth and/or the fourth bandwidth. The third PRS resource configuration information may include information such as a periodicity, a quantity of time domain symbols, an offset, a repetition factor, and a start resource block (resource block, RB).

It should be understood that, for other information included in the third PRS resource configuration information provided in this embodiment of this application, refer to the conventional technology, and information included in the third PRS resource configuration information is not exhaustively listed in this embodiment of this application.

Optionally, the network device may determine a plurality of pieces of third PRS resource configuration information for the terminal device. One cell identifier may correspond to one piece of third PRS resource configuration information. The third PRS resource configuration information may also include frequency information of a cell. For a cell, the network device may configure to receive a PRS of the cell based on the third bandwidth, or may configure to receive a PRS of the cell based on the fourth bandwidth, or may configure to receive PRSs of the cell based on the third bandwidth and the fourth bandwidth.

In an example, if the terminal device supports receiving of a PRS based on the third bandwidth, the network device may determine one or more pieces of third PRS resource configuration information for receiving a PRS based on the third bandwidth. If the terminal device supports receiving of a PRS based on the fourth bandwidth but does not support receiving of a PRS based on the third bandwidth, the network device may configure one or more pieces of third PRS resource configuration information for receiving a PRS based on the fourth bandwidth. If the terminal device supports receiving of a PRS based on the third bandwidth and supports receiving of a PRS based on the fourth bandwidth, the network device may configure one or more pieces of third PRS resource configuration information for receiving a PRS based on the third bandwidth and/or the fourth bandwidth.

In a possible implementation, there may be one or more network devices herein. The LMF may send a TRP information request message to a plurality of network devices. A network device receiving a TRP information request may determine one or more pieces of third PRS resource configuration information of a cell managed by the network device, and send the one or more pieces of third PRS resource configuration information to the LMF.

In addition, it should be noted that step 805 is not necessarily performed after step 804. Step 805 may be determined when the network device determines that a REDCAP terminal device exists in the cell managed by the network device. After step 804, if the network device determines the third PRS resource configuration information for the terminal device, step 806 may be performed.

Step 806: The network device sends the third PRS resource configuration information to the LMF.

The network device may determine one or more pieces of third PRS resource configuration information. The network device may send the third PRS resource configuration information to the LMF by using a transmission and reception point information response (TRP Information Response) message.

Step 807: The terminal device sends a positioning assistance information request (LPP Request Assistance Information) to the LMF.

The positioning assistance information request herein may be used to request the LMF to feed back configuration information of the PRS.

Step 808: The LMF sends the third PRS resource configuration information to the terminal device.

The LMF may send some or all of one or more pieces of third PRS resource configuration information that are from one or more network devices to the terminal device. Optionally, the LMF may select a part from a plurality of pieces of received third PRS resource configuration information, and send the part to the terminal device.

In an example, the LMF may determine the third PRS resource configuration information for the terminal device based on a QoS or latency requirement of a location request. For example, if the QoS requirement of the location request is high, a positioning accuracy requirement is high. In this case, the LMF may indicate the terminal device to receive the PRS based on the first bandwidth. If the QoS requirement of the location request is low, a positioning accuracy requirement is low. In this case, the LMF may indicate the terminal device to receive the PRS based on the second bandwidth. Alternatively, if the latency requirement of the location request is high, the LMF needs to feed back the location information of the terminal device in a short periodicity. In this case, the LMF may indicate the terminal device to receive the PRS based on the second bandwidth. If the latency requirement of the location request is low, the LMF does not need to feed back the location information of the terminal device in a short periodicity, and the LMF may feed back the location information of the terminal device in a long periodicity. In this case, the LMF may indicate the terminal device to receive the PRS based on the first bandwidth. Alternatively, if the latency requirement of the location request is high, and the QoS requirement of the location request is high, the LMF may indicate the terminal device to receive PRSs based on the first bandwidth and the second bandwidth.

Step 809: The terminal device receives the PRS from the network device.

The network device may send the PRS based on the third PRS resource configuration information reported by the network device to the LMF. For example, the network device may broadcast the PRS based on the third bandwidth and a corresponding time-frequency resource, and/or the network device may broadcast the PRS based on the fourth bandwidth and a corresponding time-frequency resource. The terminal device may receive, based on the third PRS resource configuration information of the cell, the PRS based on the third bandwidth and/or the fourth bandwidth.

For example, third PRS resource configuration information of a cell 1 indicates the terminal device to receive the PRS based on the third bandwidth, third PRS resource configuration information of a cell 2 indicates the terminal device to receive the PRS based on the fourth bandwidth, and third PRS resource configuration information of a cell 3 indicates the terminal device to receive the PRS based on the third bandwidth and the fourth bandwidth. In this case, the terminal device may receive, based on the third PRS resource configuration information of the cell 1, a PRS of the cell 1 on a corresponding time-frequency resource based on the third bandwidth; the terminal device may receive, based on the third PRS resource configuration information of the cell 2, a PRS of the cell 2 on a corresponding time-frequency resource based on the fourth bandwidth; and the terminal device may receive, based on the third configuration information of the cell 3, a PRS of the cell 3 on a corresponding time-frequency resource based on the third bandwidth and the fourth bandwidth.

The terminal device may receive PRSs from one or more network devices, and measure the PRSs to obtain a measurement result. The measurement result herein may be one or more of RSRP, RSRQ, SINRs, RTOAs, TOAs, and AOAs of the PRSs. Alternatively, the measurement result may be a value obtained through quantization based on one or more of the RSRP, the RSRQ, the SINRs, the RTOAs, the TOAs, and the AOAs.

Step 810: The terminal device reports the measurement result to the LMF.

The terminal device may send a measurement information response (LPP measurement information response) message to the LMF.

Step 811: The LMF obtains the location information of the terminal device through processing based on the measurement result.

The LMF may determine the location information of the terminal device based on a TOA positioning technology and an AOA positioning technology. It should be noted that the LMF may alternatively determine the location information of the terminal device by using another positioning technology. This is not specifically limited in this application.

In a possible implementation, location information of the terminal device that is obtained through resolving based on measurement information of the PRS on the first bandwidth may be used as reference information for performing location resolving based on measurement information of the PRS on the second bandwidth.

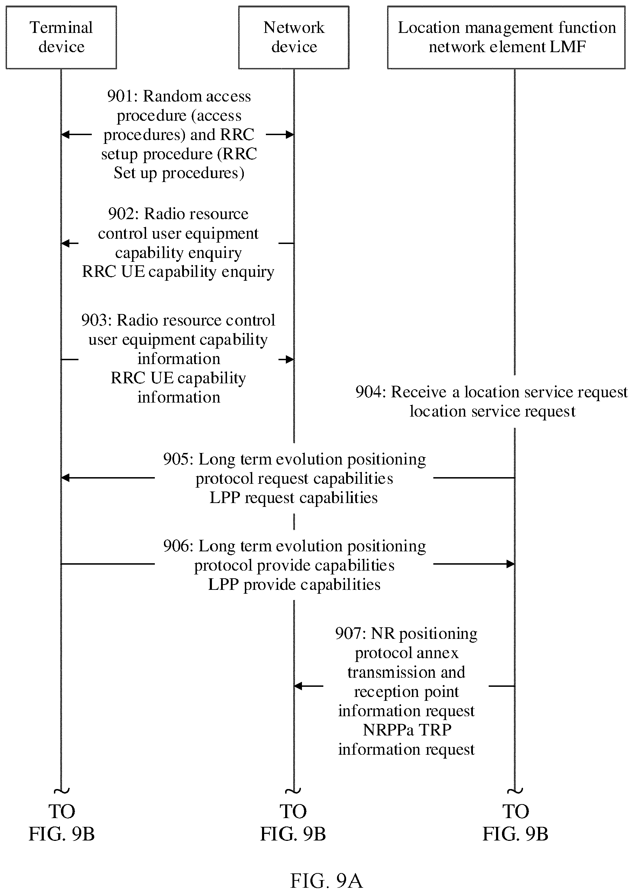

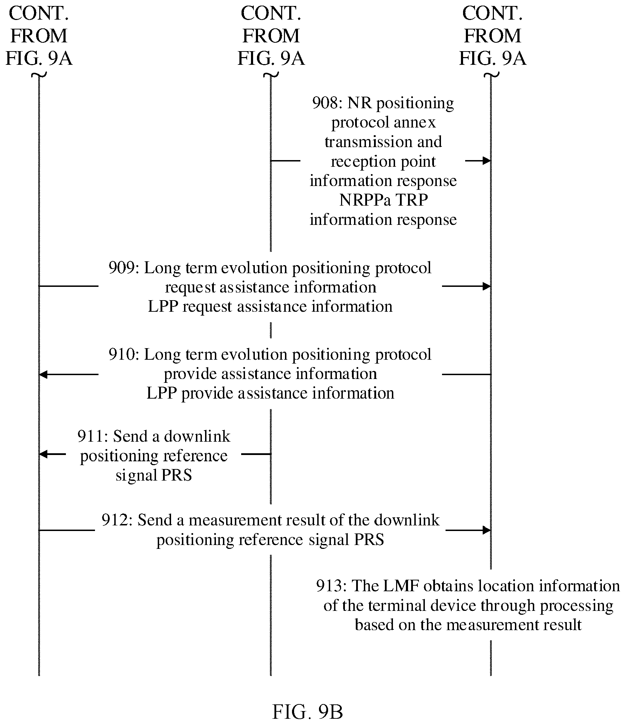

The following explains and describes, with reference to a specific embodiment, the positioning information transmission method provided in this embodiment of this application. FIG. 9A and FIG. 9B is an example flowchart of the positioning information transmission method according to an embodiment of this application. The method may include the following steps.

Step 901: The terminal device establishes uplink synchronization with the network device by using the access procedure, and establishes the RRC connection to the network device by using the RRC setup procedure.

Step 902: The network device sends an RRC UE capability enquiry to the terminal device.

The RRC UE capability enquiry may indicate the terminal device to report the capability information of the terminal device.

Step 903: The terminal device sends RRC UE capability information to the network device.

The RRC UE capability information may include one or more of the third capability information, the fourth capability information, and the switching time.

Step 904: The LMF receives a location service request.

The location service request may be used to request the location information of the terminal device.

Step 905: The LMF sends LPP request capabilities to the terminal device.

The LPP request capabilities may indicate the terminal device to report the positioning capability information of the terminal device.

Step 906: The terminal device sends LPP provide capabilities to the LMF.

The LPP provide capabilities may include one or more of the third capability information, the fourth capability information, and the switching time.

Step 907: The LMF sends an NRPPa TRP information request to the network device.

The NRPPa TRP information request may be used to request SRS configuration information determined by the network device for the terminal device.

Step 908: The network device sends an NRPPa TRP information response to the terminal device.

The NRPPa TRP information response may include one or more pieces of third PRS resource configuration information determined for the terminal device.

Step 909: The terminal device sends LPP request assistance information to the LMF.

The LPP request assistance information herein is used to request the LMF to feed back configuration information of the PRS.

Step 910: The LMF sends LPP provide assistance information to the terminal device.

The LPP provide assistance information may carry one or more pieces of third PRS resource configuration information determined by one or more network devices for the terminal device.

Step 911: The network device sends the PRS.

The network device herein may send, based on the third PRS resource configuration information reported to the LMF, the PRS based on the third bandwidth and/or the fourth bandwidth. The terminal device may receive, based on the third PRS resource configuration information, PRSs of one or more cells based on the third bandwidth and/or the fourth bandwidth.

The terminal device may also perform measurement based on the received PRSs to obtain a measurement result. The measurement result herein may be one or more of RSRP, RSRQ, a SINR, a TOA, an AOA, and an RTOA.

Step 912: The terminal device sends the PRS measurement result to the LMF.

The terminal device may send the measurement result to the LMF by using an LPP measurement response message.

Step 913: The LMF obtains the location information of the terminal device through processing based on the measurement result.

Based on step 901 to step 913, the terminal device may receive the PRS based on the large bandwidth, so that positioning accuracy can be improved. In addition, the LMF can select one or more pieces of PRS configuration information from a plurality of pieces of PRS configuration information, and feed back the configuration information to the terminal device, thereby reducing signaling transmission overheads.

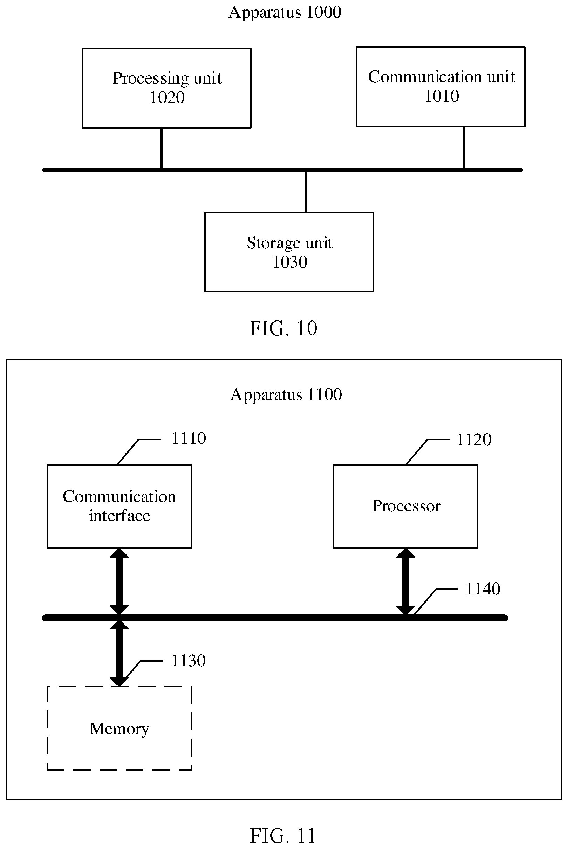

Based on the same technical concept as the communication methods, as shown in FIG. 10, an apparatus 1000 is provided. The apparatus 1000 can perform the steps performed on the terminal device side, the network device side, and the location server side in the methods. To avoid repetition, details are not described herein again.

The apparatus 1000 includes a communication unit 1010 and a processing unit 1020, and optionally, further includes a storage unit 1030. The processing unit 1020 may be separately connected to the storage unit 1030 and the communication unit 1010, or the storage unit 1030 may be connected to the communication unit 1010. The processing unit 1020 may be integrated with the storage unit 1030. The communication unit 1010 may also be referred to as a transceiver, a transceiver machine, a transceiver apparatus, or the like. The processing unit 1020 may also be referred to as a processor, a processing board, a processing module, a processing apparatus, or the like. Optionally, a component that is in the communication unit 1010 and that is configured to implement a receiving function may be considered as a receiving unit, and a component that is in the communication unit 1010 and that is configured to implement a sending function may be considered as a sending unit. In other words, the communication unit 1010 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the communication unit 1010 is configured to perform sending operations and receiving operations on the terminal device side, the network device side, and the location server side in the method embodiments, and the processing unit 1020 is configured to perform an operation other than the sending and receiving operations on the terminal device side, the network device side, and the location server side in the method embodiments. For example, in an implementation, the communication unit 1010 is configured to perform receiving operations on the terminal device side, the network device side, and the location server side or sending operations on the terminal device side, the network device side, and the location server side in FIG. 3 to FIG. 5 and FIG. 7 to FIG. 9A and FIG. 9B, and/or the communication unit 1010 is further configured to perform other receiving and sending steps on the terminal device side, the network device side, and the location server side in embodiments of this application. The processing unit 1020 is configured to perform processing steps on the terminal device side, the network device side, and the location server side in FIG. 3 to FIG. 5 and FIG. 7 to FIG. 9A and FIG. 9B, and/or the processing unit 1020 is configured to perform other processing steps on the terminal device side, the network device side, and the location server side in embodiments of this application.

The storage unit 1030 is configured to store a computer program.

For example, when the apparatus 1000 is configured to perform the steps performed on the terminal device side, the communication unit 1010 is configured to receive first information from a network device, where the first information is used to request capability context information of the communication apparatus; the processing unit 1020 is configured to determine first capability information, where the first capability information includes capability information of sending a reference signal by the communication apparatus based on a first bandwidth, the first bandwidth is greater than a second bandwidth, the first bandwidth is used by the communication apparatus to send the reference signal, and the second bandwidth is used by the communication apparatus to receive and send communication data; and the communication unit 1010 is further configured to send the first capability information to the network device.

In a possible implementation, the processing unit 1020 is further configured to determine second capability information, where the second capability information includes capability information of sending a reference signal by the communication apparatus based on the second bandwidth; and the communication unit 1010 is further configured to send the second capability information to the network device.

In a possible implementation, the processing unit 1020 is further configured to determine a switching time, where the switching time is a switching time between sending the reference signal based on the first bandwidth and sending the reference signal based on the second bandwidth by the communication apparatus, the switching time includes a first switching time and/or a second switching time, the first switching time is a switching time in which the communication apparatus switches from sending the reference signal based on the first bandwidth to sending the reference signal based on the second bandwidth, and the second switching time is a switching time in which the communication apparatus switches from sending the reference signal based on the second bandwidth to sending the reference signal based on the first bandwidth; and the communication unit 1010 is further configured to send the switching time to the network device.

In a possible implementation, the communication unit 1010 is further configured to: receive second information from a location server, where the second information is used to request positioning capability information of the communication apparatus; and send one or more of the first capability information, the second capability information, and the switching time to the location server.

In a possible implementation, the communication unit 1010 is further configured to: receive first reference signal configuration information from the network device, where the first reference signal configuration information indicates the communication apparatus to send the reference signal based on the first bandwidth; and send, based on the first reference signal configuration information, the reference signal based on the first bandwidth.

In a possible implementation, the communication unit 1010 is further configured to: receive second reference signal configuration information from the network device, where the second reference signal configuration information indicates the communication apparatus to send the reference signal based on the second bandwidth; and send, based on the second reference signal configuration information, the reference signal based on the second bandwidth.

For example, when the apparatus 1000 is configured to perform the steps performed by the terminal device, the communication unit 1010 is configured to receive fourth information from a network device, where the fourth information is used to request capability context information of the communication apparatus; the processing unit 1020 is configured to determine third capability information, where the third capability information includes capability information of receiving a reference signal by the communication apparatus based on a third bandwidth, the third bandwidth is greater than a fourth bandwidth, the fourth bandwidth is used by the communication apparatus to receive the reference signal, and the fourth bandwidth is used by the communication apparatus to receive and send communication data; and the communication unit 1010 is further configured to send the third capability information to the network device.

In a possible implementation, the processing unit 1020 is further configured to determine fourth capability information, where the fourth capability information includes capability information of receiving a reference signal by the communication apparatus based on the fourth bandwidth; and the communication unit 1010 is further configured to send the fourth capability information to the network device.

In a possible implementation, the processing unit 1020 is further configured to determine a switching time, where the switching time is a switching time between receiving the reference signal based on the third bandwidth and receiving a reference signal based on the fourth bandwidth by the communication apparatus, the switching time includes a third switching time and/or a fourth switching time, the third switching time is a switching time in which the communication apparatus switches from receiving the reference signal based on the third bandwidth to receiving the reference signal based on the fourth bandwidth, and the fourth switching time is a switching time in which the communication apparatus switches from receiving the reference signal based on the fourth bandwidth to receiving the reference signal based on the third bandwidth; and the communication unit 1010 is further configured to send the switching time to the network device.

In a possible implementation, the communication unit 1010 is further configured to: receive fifth information from a location server, where the fifth information is used to request positioning capability information of the communication apparatus; and send one or more of the third capability information, the fourth capability information, and the switching time to the location server.

In a possible implementation, the communication unit 1010 is further configured to: receive third reference signal resource configuration information from a location server, where the third reference signal resource configuration information indicates the communication apparatus to receive the reference signal based on the third bandwidth and/or the fourth bandwidth; and receive, based on the third reference signal resource configuration information, the reference signal based on the third bandwidth and/or the fourth bandwidth.

For example, when the apparatus 1000 is configured to perform the steps performed by the network device, the processing unit 1020 is configured to generate first information, where the first information is used to request capability context information of a terminal device; the communication unit 1010 is configured to send the first information to the terminal device; and the communication unit 1010 is further configured to receive first capability information from the terminal device, where the first capability information includes capability information of sending a reference signal by the terminal device based on a first bandwidth, the first bandwidth is greater than a second bandwidth, the first bandwidth is used by the terminal device to send the reference signal, and the second bandwidth is used by the terminal device to receive and send communication data.

In a possible implementation, the communication unit 1010 is further configured to receive second capability information from the terminal device, where the second capability information includes capability information of sending a reference signal by the terminal device based on the second bandwidth.

In a possible implementation, the communication unit 1010 is further configured to receive a switching time from the terminal device, where the switching time is a switching time between sending the reference signal based on the first bandwidth and sending a reference signal based on the second bandwidth by the terminal device. The switching time includes a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

In a possible implementation, the communication unit 1010 is further configured to receive third information from a location server, where the third information is used to request the communication apparatus to report reference signal configuration information determined for the terminal device.

In a possible implementation, the third information further includes indication information. The indication information indicates the communication apparatus to determine first reference signal configuration information for the terminal device, and the first reference signal configuration information indicates the terminal device to send the reference signal based on the first bandwidth. Alternatively, the indication information indicates the communication apparatus to determine second reference signal configuration information for the terminal device, and the second reference signal configuration information indicates the terminal device to send the reference signal based on the second bandwidth. Alternatively, the indication information indicates the communication apparatus to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

In a possible implementation, the communication unit 1010 is further configured to send the first reference signal configuration information to the terminal device, where the second reference signal configuration information indicates the terminal device to send the reference signal based on the first bandwidth.

In a possible implementation, the communication unit 1010 is further configured to send the second reference signal configuration information to the terminal device, where the second reference signal configuration information indicates the terminal device to send the reference signal based on the second bandwidth.

For example, when the apparatus 1000 is configured to perform the steps performed by the network device, the processing unit 1020 is configured to generate fourth information, where the fourth information is used to request capability context information of a terminal device; the communication unit 1010 is configured to send the fourth information to the terminal device; and the communication unit 1010 is further configured to receive third capability information from the terminal device, where the third capability information includes capability information of receiving a reference signal by the terminal device based on a third bandwidth, the third bandwidth is greater than a fourth bandwidth, the third bandwidth is used to receive the reference signal, and the fourth bandwidth is used by the terminal device to receive and send communication data.

In a possible implementation, the communication unit 1010 is further configured to receive fourth capability information from the terminal device, where the fourth capability information includes capability information of receiving a reference signal by the terminal device based on the fourth bandwidth.

In a possible implementation, the communication unit 1010 is further configured to receive a switching time from the terminal device, where the switching time is a switching time between receiving the reference signal based on the third bandwidth and receiving a reference signal based on the fourth bandwidth by the terminal device. The switching time includes a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

In a possible implementation, the communication unit 1010 is further configured to: receive sixth information from a location server, where the sixth information is used to request the communication apparatus to report reference signal resource configuration information determined for the terminal device; and send third reference signal resource configuration information to the location server, where the third reference signal resource configuration information indicates the terminal device to receive the reference signal based on the third bandwidth and/or the fourth bandwidth.

For example, when the apparatus 1000 is configured to perform the steps performed by the location server, the communication unit 1010 is configured to receive location request information, where the location request information is used to request location information of a terminal device; the processing unit 1020 is configured to generate second information, where the second information is used to request positioning capability information of the terminal device; the communication unit 1010 is further configured to send the second information; and the communication unit 1010 is further configured to receive first capability information from the terminal device, where the first capability information includes capability information of sending a reference signal by the terminal device based on a first bandwidth, the first bandwidth is greater than a second bandwidth, the first bandwidth is used by the terminal device to send the reference signal, and the second bandwidth is used by the terminal device to receive and send communication data.

In a possible implementation, the communication unit 1010 is further configured to receive second capability information from the terminal device, where the second capability information includes capability information of sending a reference signal by the terminal device based on the second bandwidth.

In a possible implementation, the communication unit 1010 is further configured to receive a switching time from the terminal device, where the switching time is a switching time between sending the reference signal based on the first bandwidth and sending a reference signal based on the second bandwidth by the terminal device. The switching time includes a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

In a possible implementation, the communication unit 1010 is further configured to send third information to a network device, where the third information is used to request the network device to report reference signal configuration information determined for the terminal device.

In a possible implementation, the third information further includes indication information. The indication information indicates the network device to determine first reference signal configuration information for the terminal device, and the first reference signal configuration information indicates the terminal device to send the reference signal based on the first bandwidth. Alternatively, the indication information indicates the network device to determine second reference signal configuration information for the terminal device, and the second reference signal configuration information indicates the terminal device to send the reference signal based on the second bandwidth. Alternatively, the indication information indicates the network device to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

For example, when the apparatus 1000 is configured to perform the steps performed by the location server, the communication unit 1010 is configured to receive location request information, where the location request information is used to request location information of a terminal device; the processing unit 1020 is configured to generate fifth information, where the fifth information is used to request positioning capability information of the terminal device; the communication unit 1010 is further configured to send the fifth information; and the communication unit 1010 is further configured to receive third capability information from the terminal device, where the third capability information includes capability information of receiving a reference signal by the terminal device based on a third bandwidth, the third bandwidth is greater than a fourth bandwidth, the fourth bandwidth is only used by the terminal device to receive the reference signal, and the fourth bandwidth is used by the terminal device to receive and send communication data.

In a possible implementation, the communication unit 1010 is further configured to receive fourth capability information from the terminal device, where the fourth capability information includes capability information of receiving a reference signal by the terminal device based on the fourth bandwidth.

In a possible implementation, the communication unit 1010 is further configured to receive a switching time from the terminal device, where the switching time is a switching time between receiving the reference signal based on the third bandwidth and receiving a reference signal based on the fourth bandwidth by the terminal device. The switching time includes a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

In a possible implementation, the communication unit 1010 is further configured to: send sixth information to a network device, where the sixth information is used to request the network device to report third reference signal resource configuration information; receive the third reference signal resource configuration information from the network device, where the third reference signal resource configuration information indicates the terminal device to receive the reference signal based on the third bandwidth and/or the fourth bandwidth; and send the third reference signal resource configuration information to the terminal device.

When the apparatus is a chip apparatus or circuit, the apparatus may include a communication unit and a processing unit. The communication unit may be an input/output circuit and/or a communication interface. The processing unit is an integrated processor, a microprocessor, or an integrated circuit. The communication unit may input data and output data, and the processing unit may determine output data based on the input data. For example, the communication unit may input first information. The processing unit may determine output data, for example, first capability information, based on the input data, for example, the first information.

FIG. 11 shows an apparatus 1100 according to an embodiment of this application, to implement functions on the terminal device side, the network device side, and the location server side in the methods. When the apparatus is configured to implement a function of the terminal device in the methods, the apparatus may be the terminal device, or may be a chip having a function similar to that of the terminal device, or an apparatus that can be used in a matching manner with the terminal device. When the apparatus is configured to implement a function of the network device, the apparatus may be the network device, or may be a chip having a function similar to that of the network device, or an apparatus that can be used in a matching manner with the network device. When the apparatus is configured to implement a function of the location server in the methods, the apparatus may be the location server, or may be a chip having a function similar to that of the location server, or may be an apparatus that can be used in a matching manner with the location server.

The apparatus 1100 includes at least one processor 1120, configured to implement functions on the terminal device side, the network device side, and the location server side in the methods provided in embodiments of this application. The apparatus 1100 may further include a communication interface 1110. In this embodiment of this application, the communication interface may be a transceiver, a circuit, a bus, a module, or a communication interface of another type, and is configured to communicate with another device by using a transmission medium. For example, the communication interface 1110 is used by an apparatus in the apparatus 1100 to communicate with the another device. The processor 1120 may complete a function of the processing unit 1020 shown in FIG. 10, and the communication interface 1110 may complete a function of the communication unit 1010 shown in FIG. 10.

The apparatus 1100 may further include at least one memory 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. At least one of the at least one memory may be included in the processor.

A specific connection medium between the communication interface 1110, the processor 1120, and the memory 1130 is not limited in this embodiment of this application. In this embodiment of this application, the memory 1130, the processor 1120, and the communication interface 1110 are connected through a bus 1140 in FIG. 11, and the bus is represented by a bold line in FIG. 8. A connection manner between other components is schematically described, and is not limited thereto. The bus may be classified into an address bus, a data bus, a control bus, and the like. For ease of representation, only one bold line is used to represent the bus in FIG. 11, but this does not mean that there is only one bus or only one type of bus.

In another form of this embodiment, a computer-readable storage medium is provided. The computer-readable storage medium stores instructions. When the instructions are executed, the methods on the terminal device side, the network device side, and the location server side in the method embodiments are performed.

In another form of this embodiment, a computer program product including instructions is provided. When the instructions are executed by an electronic apparatus (for example, a computer, a processor, or an apparatus installed with a processor), the electronic apparatus is enabled to perform the methods on the terminal device side, the network device side, and the location server side in the method embodiments.

In another form of this embodiment, a communication system is provided, and the system may include at least one network device and at least one location server.

It should be understood that the processor mentioned in embodiments of the present invention may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that may store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning information transmission method, comprising:
receiving, by a terminal device, first information from a network device, wherein the first information is used to request capability information of the terminal device; and
sending, by the terminal device, first capability information to the network device, wherein
the first capability information comprises capability information of sending a reference signal by the terminal device based on a first bandwidth, the first bandwidth is greater than a second bandwidth, the first bandwidth is used by the terminal device to send the reference signal, and the second bandwidth is used by the terminal device to receive and/or send communication data.

2. The method according to claim 1, further comprising:
sending, by the terminal device, second capability information to the network device, wherein the second capability information comprises capability information of sending the reference signal by the terminal device based on the second bandwidth.

3. The method according to claim 2, further comprising:
sending, by the terminal device, a switching time to the network device, wherein the switching time is a switching time between sending the reference signal based on the first bandwidth and sending the reference signal based on the second bandwidth by the terminal device, wherein
the switching time comprises a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

4. The method according to claim 3, further comprising:
receiving, by the terminal device, second information from a location server, wherein the second information is used to request positioning capability information of the terminal device; and
sending, by the terminal device, one or more of the first capability information, the second capability information, and the switching time to the location server.

5. The method according to any one of claims 1 to 4, further comprising:
receiving, by the terminal device, first reference signal configuration information from the network device, wherein the first reference signal configuration information indicates the terminal device to send the reference signal based on the first bandwidth; and
sending, by the terminal device, based on the first reference signal configuration information, the reference signal based on the first bandwidth.

6. The method according to any one of claims 1 to 5, further comprising:
receiving, by the terminal device, second reference signal configuration information from the network device, wherein the second reference signal configuration information indicates the terminal device to send the reference signal based on the second bandwidth; and
sending, by the terminal device, based on the second reference signal configuration information, the reference signal based on the second bandwidth.

7. A positioning information transmission method, comprising:
sending, by a network device, first information to a terminal device, wherein the first information is used to request capability information of the terminal device; and
receiving, by the network device, first capability information from the terminal device, wherein
the first capability information comprises capability information of sending a reference signal by the terminal device based on a first bandwidth, the first bandwidth is greater than a second bandwidth, the first bandwidth is used by the terminal device to send the reference signal, and the second bandwidth is used by the terminal device to receive and/or send communication data.

8. The method according to claim 7, further comprising:
receiving, by the network device, second capability information from the terminal device, wherein the second capability information comprises capability information of sending the reference signal by the terminal device based on the second bandwidth.

9. The method according to claim 8, further comprising:
receiving, by the network device, a switching time from the terminal device, wherein the switching time is a switching time between sending the reference signal based on the first bandwidth and sending the reference signal based on the second bandwidth by the terminal device, wherein
the switching time comprises a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

10. The method according to any one of claims 7 to 9, further comprising:
receiving, by the network device, third information from a location server, wherein the third information is used to request the network device to report reference signal configuration information determined for the terminal device.

11. The method according to claim 10, wherein the third information further comprises indication information; and
the indication information indicates the network device to determine first reference signal configuration information for the terminal device, and the first reference signal configuration information indicates the terminal device to send the reference signal based on the first bandwidth; or
the indication information indicates the network device to determine second reference signal configuration information for the terminal device, and the second reference signal configuration information indicates the terminal device to send the reference signal based on the second bandwidth; or
the indication information indicates the network device to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

12. The method according to any one of claims 7 to 11, further comprising:
sending, by the network device, the first reference signal configuration information to the terminal device, wherein the first reference signal configuration information indicates the terminal device to send the reference signal based on the first bandwidth.

13. The method according to any one of claims 7 to 12, further comprising:
sending, by the network device, the second reference signal configuration information to the terminal device, wherein the second reference signal configuration information indicates the terminal device to send the reference signal based on the second bandwidth.

14. A positioning information transmission method, comprising:
receiving, by a location server, location request information, wherein the location request information is used to request location information of a terminal device;
sending, by the location server, second information, wherein the second information is used to request positioning capability information of the terminal device; and
receiving, by the location server, first capability information from the terminal device, wherein
the first capability information comprises capability information of sending a reference signal by the terminal device based on a first bandwidth, the first bandwidth is greater than a second bandwidth, the first bandwidth is used by the terminal device to send the reference signal, and the second bandwidth is used by the terminal device to receive and/or send communication data.

15. The method according to claim 14, further comprising:
receiving, by the location server, second capability information from the terminal device, wherein the second capability information comprises capability information of receiving and/or sending the reference signal by the terminal device based on the second bandwidth.

16. The method according to claim 15, further comprising:
receiving, by the location server, a switching time from the terminal device, wherein the switching time is a switching time between sending the reference signal based on the first bandwidth and sending the reference signal based on the second bandwidth by the terminal device, wherein
the switching time comprises a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

17. The method according to any one of claims 14 to 16, further comprising:
sending, by the location server, third information to a network device, wherein the third information is used to request the network device to report reference signal configuration information determined for the terminal device.

18. The method according to claim 17, wherein the third information further comprises indication information; and
the indication information indicates the network device to determine first reference signal configuration information for the terminal device, and the first reference signal configuration information indicates the terminal device to send the reference signal based on the first bandwidth; or
the indication information indicates the network device to determine second reference signal configuration information for the terminal device, and the second reference signal configuration information indicates the terminal device to send the reference signal based on the second bandwidth; or
the indication information indicates the network device to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

19. A positioning information transmission method, comprising:
receiving, by a terminal device, fourth information from a network device, wherein the fourth information is used to request capability information of the terminal device; and
sending, by the terminal device, third capability information to the network device, wherein
the third capability information comprises capability information of receiving a reference signal by the terminal device based on a third bandwidth, the third bandwidth is greater than a fourth bandwidth, the fourth bandwidth is used by the terminal device to receive the reference signal, and the fourth bandwidth is used by the terminal device to receive and/or send communication data.

20. The method according to claim 19, further comprising:
sending, by the terminal device, fourth capability information to the network device, wherein the fourth capability information comprises capability information of receiving the reference signal by the terminal device based on the fourth bandwidth.

21. The method according to claim 20, further comprising:
sending, by the terminal device, a switching time to the network device, wherein the switching time is a switching time between receiving the reference signal based on the third bandwidth and receiving the reference signal based on the fourth bandwidth by the terminal device, wherein
the switching time comprises a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

22. The method according to claim 21, further comprising:
receiving, by the terminal device, fifth information from a location server, wherein the fifth information is used to request positioning capability information of the terminal device; and
sending, by the terminal device, one or more of the third capability information, the fourth capability information, and the switching time to the location server.

23. The method according to any one of claims 19 to 22, further comprising:
receiving, by the terminal device, third reference signal resource configuration information from a location server, wherein the third reference signal resource configuration information indicates the terminal device to receive the reference signal based on the third bandwidth and/or the fourth bandwidth; and
receiving, by the terminal device, based on the third reference signal resource configuration information, the reference signal based on the third bandwidth and/or the fourth bandwidth.

24. A positioning information transmission method, comprising:
sending, by a network device, fourth information to a terminal device, wherein the fourth information is used to request capability information of the terminal device; and
receiving, by the network device, third capability information from the terminal device, wherein
the third capability information comprises capability information of receiving a reference signal by the terminal device based on a third bandwidth, the third bandwidth is greater than a fourth bandwidth, the third bandwidth is used to receive the reference signal, and the fourth bandwidth is used by the terminal device to receive and/or send communication data.

25. The method according to claim 24, further comprising:
receiving, by the network device, fourth capability information from the terminal device, wherein the fourth capability information comprises capability information of receiving the reference signal by the terminal device based on the fourth bandwidth.

26. The method according to claim 25, further comprising:
receiving, by the network device, a switching time from the terminal device, wherein the switching time is a switching time between receiving the reference signal based on the third bandwidth and receiving the reference signal based on the fourth bandwidth by the terminal device, wherein
the switching time comprises a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

27. The method according to either of claims 25 and 26, further comprising:
receiving, by the network device, sixth information from a location server, wherein the sixth information is used to request the network device to report reference signal resource configuration information; and
sending, by the network device, third reference signal resource configuration information to the location server, wherein the third reference signal resource configuration information indicates the terminal device to receive the reference signal based on the third bandwidth and/or the fourth bandwidth.

28. A positioning information transmission method, comprising:
receiving, by a location server, location request information, wherein the location request information is used to request location information of a terminal device;
sending, by the location server, fifth information, wherein the fifth information is used to request positioning capability information of the terminal device; and
receiving, by the location server, third capability information from the terminal device, wherein
the third capability information comprises capability information of receiving a reference signal by the terminal device based on a third bandwidth, the third bandwidth is greater than a fourth bandwidth, the fourth bandwidth is only used by the terminal device to receive the reference signal, and the fourth bandwidth is used by the terminal device to receive and send communication data.

29. The method according to claim 28, further comprising:
receiving, by the location server, fourth capability information from the terminal device, wherein the fourth capability information comprises capability information of receiving the reference signal by the terminal device based on the fourth bandwidth.

30. The method according to claim 29, further comprising:
receiving, by the location server, a switching time from the terminal device, wherein the switching time is a switching time between receiving the reference signal based on the third bandwidth and receiving the reference signal based on the fourth bandwidth by the terminal device, wherein
the switching time comprises a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

31. The method according to any one of claims 28 to 30, further comprising:
sending, by the location server, sixth information to a network device, wherein the sixth information is used to request the network device to report third reference signal resource configuration information;
receiving, by the location server, the third reference signal resource configuration information from the network device, wherein the third reference signal resource configuration information indicates the terminal device to receive the reference signal based on the third bandwidth and/or the fourth bandwidth; and
sending, by the location server, the third reference signal resource configuration information to the terminal device.

32. A communication apparatus, comprising a processing unit and a communication unit, wherein
the communication unit is configured to receive first information from a network device, wherein the first information is used to request capability context information of the communication apparatus;
the processing unit is configured to determine first capability information, wherein the first capability information comprises capability information of sending a reference signal by the communication apparatus based on a first bandwidth, the first bandwidth is greater than a second bandwidth, the first bandwidth is used by the communication apparatus to send the reference signal, and the second bandwidth is used by the communication apparatus to receive and send communication data; and
the communication unit is further configured to send the first capability information to the network device.

33. The apparatus according to claim 32, wherein
the processing unit is further configured to determine second capability information, wherein the second capability information comprises capability information of sending the reference signal by the communication apparatus based on the second bandwidth; and
the communication unit is further configured to send the second capability information to the network device.

34. The apparatus according to claim 33, wherein
the processing unit is further configured to determine a switching time, wherein the switching time is a switching time between sending the reference signal based on the first bandwidth and sending the reference signal based on the second bandwidth by the communication apparatus, wherein
the switching time comprises a first switching time and/or a second switching time, the first switching time is a switching time in which the communication apparatus switches from sending the reference signal based on the first bandwidth to sending the reference signal based on the second bandwidth, and the second switching time is a switching time in which the communication apparatus switches from sending the reference signal based on the second bandwidth to sending the reference signal based on the first bandwidth; and
the communication unit is further configured to send the switching time to the network device.

35. The apparatus according to claim 34, wherein the communication unit is further configured to:
receive second information from a location server, wherein the second information is used to request positioning capability information of the communication apparatus; and
send one or more of the first capability information, the second capability information, and the switching time to the location server.

36. The apparatus according to any one of claims 32 to 35, wherein the communication unit is further configured to:
receive first reference signal configuration information from the network device, wherein the first reference signal configuration information indicates the communication apparatus to send the reference signal based on the first bandwidth; and
send, based on the first reference signal configuration information, the reference signal based on the first bandwidth.

37. The apparatus according to any one of claims 32 to 36, wherein the communication unit is further configured to:
receive second reference signal configuration information from the network device, wherein the second reference signal configuration information indicates the communication apparatus to send the reference signal based on the second bandwidth; and
send, based on the second reference signal configuration information, the reference signal based on the second bandwidth.

38. A communication apparatus, comprising a processing unit and a communication unit, wherein
the processing unit is configured to generate first information, wherein the first information is used to request capability context information of a terminal device;
the communication unit is configured to send the first information to the terminal device; and
the communication unit is further configured to receive first capability information from the terminal device, wherein
the first capability information comprises capability information of sending a reference signal by the terminal device based on a first bandwidth, the first bandwidth is greater than a second bandwidth, the first bandwidth is used by the terminal device to send the reference signal, and the second bandwidth is used by the terminal device to receive and send communication data.

39. The apparatus according to claim 38, wherein the communication unit is further configured to:
receive second capability information from the terminal device, wherein the second capability information comprises capability information of sending the reference signal by the terminal device based on the second bandwidth.

40. The apparatus according to claim 39, wherein the communication unit is further configured to:
receive a switching time from the terminal device, wherein the switching time is a switching time between sending the reference signal based on the first bandwidth and sending the reference signal based on the second bandwidth by the terminal device, wherein
the switching time comprises a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

41. The apparatus according to any one of claims 38 to 40, wherein the communication unit is further configured to:
receive third information from a location server, wherein the third information is used to request the communication apparatus to report reference signal configuration information determined for the terminal device.

42. The apparatus according to claim 41, wherein the third information further comprises indication information; and
the indication information indicates the communication apparatus to determine first reference signal configuration information for the terminal device, and the first reference signal configuration information indicates the terminal device to send the reference signal based on the first bandwidth; or
the indication information indicates the communication apparatus to determine second reference signal configuration information for the terminal device, and the second reference signal configuration information indicates the terminal device to send the reference signal based on the second bandwidth; or
the indication information indicates the communication apparatus to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

43. The apparatus according to any one of claims 38 to 42, wherein the communication unit is further configured to:
send the first reference signal configuration information to the terminal device, wherein the second reference signal configuration information indicates the terminal device to send the reference signal based on the first bandwidth.

44. The apparatus according to any one of claims 38 to 43, wherein the communication unit is further configured to:
send the second reference signal configuration information to the terminal device, wherein the second reference signal configuration information indicates the terminal device to send the reference signal based on the second bandwidth.

45. A communication apparatus, comprising a processing unit and a communication unit, wherein
the communication unit is configured to receive location request information, wherein the location request information is used to request location information of a terminal device;
the processing unit is configured to generate second information, wherein the second information is used to request positioning capability information of the terminal device;
the communication unit is further configured to send the second information; and
the communication unit is further configured to receive first capability information from the terminal device, wherein
the first capability information comprises capability information of sending a reference signal by the terminal device based on a first bandwidth, the first bandwidth is greater than a second bandwidth, the first bandwidth is used by the terminal device to send the reference signal, and the second bandwidth is used by the terminal device to receive and send communication data.

46. The apparatus according to claim 45, wherein the communication unit is further configured to:
receive second capability information from the terminal device, wherein the second capability information comprises capability information of sending the reference signal by the terminal device based on the second bandwidth.

47. The apparatus according to claim 46, wherein the communication unit is further configured to:
receive a switching time from the terminal device, wherein the switching time is a switching time between sending the reference signal based on the first bandwidth and sending the reference signal based on the second bandwidth by the terminal device, wherein
the switching time comprises a first switching time and/or a second switching time, the first switching time is a switching time in which the terminal device switches from sending the reference signal based on the first bandwidth to sending the reference signal based on the second bandwidth, and the second switching time is a switching time in which the terminal device switches from sending the reference signal based on the second bandwidth to sending the reference signal based on the first bandwidth.

48. The apparatus according to any one of claims 45 to 47, wherein the communication unit is further configured to:
send third information to a network device, wherein the third information is used to request the network device to report reference signal configuration information determined for the terminal device.

49. The apparatus according to claim 48, wherein the third information further comprises indication information; and
the indication information indicates the network device to determine first reference signal configuration information for the terminal device, and the first reference signal configuration information indicates the terminal device to send the reference signal based on the first bandwidth; or
the indication information indicates the network device to determine second reference signal configuration information for the terminal device, and the second reference signal configuration information indicates the terminal device to send the reference signal based on the second bandwidth; or
the indication information indicates the network device to determine first reference signal configuration information and second reference signal configuration information for the terminal device, the first reference signal configuration information indicates the terminal device to send the reference signal based on the first bandwidth, and the second reference signal configuration information indicates the terminal device to send the reference signal based on the second bandwidth.

50. A communication apparatus, comprising a processing unit and a communication unit, wherein
the communication unit is configured to receive fourth information from a network device, wherein the fourth information is used to request capability context information of the communication apparatus;
the processing unit is configured to determine third capability information, wherein the third capability information comprises capability information of receiving a reference signal by the communication apparatus based on a third bandwidth, the third bandwidth is greater than a fourth bandwidth, the fourth bandwidth is used by the communication apparatus to receive the reference signal, and the fourth bandwidth is used by the communication apparatus to receive and send communication data; and
the communication unit is further configured to send the third capability information to the network device.

51. The apparatus according to claim 50, wherein
the processing unit is further configured to determine fourth capability information, wherein the fourth capability information comprises capability information of receiving the reference signal by the communication apparatus based on the fourth bandwidth; and
the communication unit is further configured to send the fourth capability information to the network device.

52. The apparatus according to claim 51, wherein
the processing unit is further configured to determine a switching time, wherein the switching time is a switching time between receiving the reference signal based on the third bandwidth and receiving the reference signal based on the fourth bandwidth by the communication apparatus, wherein
the switching time comprises a third switching time and/or a fourth switching time, the third switching time is a switching time in which the communication apparatus switches from receiving the reference signal based on the third bandwidth to receiving the reference signal based on the fourth bandwidth, and the fourth switching time is a switching time in which the communication apparatus switches from receiving the reference signal based on the fourth bandwidth to receiving the reference signal based on the third bandwidth; and
the communication unit is further configured to send the switching time to the network device.

53. The apparatus according to claim 52, wherein the communication unit is further configured to:
receive fifth information from a location server, wherein the fifth information is used to request positioning capability information of the communication apparatus; and
send one or more of the third capability information, the fourth capability information, and the switching time to the location server.

54. The apparatus according to any one of claims 50 to 53, wherein the communication unit is further configured to:
receive third reference signal resource configuration information from the location server, wherein the third reference signal resource configuration information indicates the communication apparatus to receive the reference signal based on the third bandwidth and/or the fourth bandwidth; and
receive, based on the third reference signal resource configuration information, the reference signal based on the third bandwidth and/or the fourth bandwidth.

55. A communication apparatus, comprising a processing unit and a communication unit, wherein
the processing unit is configured to generate fourth information, wherein the fourth information is used to request capability context information of a terminal device;
the communication unit is configured to send the fourth information to the terminal device; and
the communication unit is further configured to receive third capability information from the terminal device, wherein
the third capability information comprises capability information of receiving a reference signal by the terminal device based on a third bandwidth, the third bandwidth is greater than a fourth bandwidth, the third bandwidth is used to receive the reference signal, and the fourth bandwidth is used by the terminal device to receive and send communication data.

56. The apparatus according to claim 55, wherein the communication unit is further configured to:
receive fourth capability information from the terminal device, wherein the fourth capability information comprises capability information of receiving the reference signal by the terminal device based on the fourth bandwidth.

57. The apparatus according to claim 56, wherein the communication unit is further configured to:
receive a switching time from the terminal device, wherein the switching time is a switching time between receiving the reference signal based on the third bandwidth and receiving the reference signal based on the fourth bandwidth by the terminal device, wherein
the switching time comprises a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

58. The apparatus according to any one of claims 55 to 57, wherein the communication unit is further configured to:
receive sixth information from a location server, wherein the sixth information is used to request the communication apparatus to report reference signal resource configuration information determined for the terminal device; and
send third reference signal resource configuration information to the location server, wherein the third reference signal resource configuration information indicates the terminal device to receive the reference signal based on the third bandwidth and/or the fourth bandwidth.

59. A communication apparatus, comprising a processing unit and a communication unit, wherein
the communication unit is configured to receive location request information, wherein the location request information is used to request location information of a terminal device;
the processing unit is configured to generate fifth information, wherein the fifth information is used to request positioning capability information of the terminal device;
the communication unit is further configured to send the fifth information; and
the communication unit is further configured to receive third capability information from the terminal device, wherein
the third capability information comprises capability information of receiving a reference signal by the terminal device based on a third bandwidth, the third bandwidth is greater than a fourth bandwidth, the fourth bandwidth is only used by the terminal device to receive the reference signal, and the fourth bandwidth is used by the terminal device to receive and send communication data.

60. The apparatus according to claim 59, wherein the communication unit is further configured to:
receive fourth capability information from the terminal device, wherein the fourth capability information comprises capability information of receiving the reference signal by the terminal device based on the fourth bandwidth.

61. The apparatus according to claim 60, wherein the communication unit is further configured to:
receive a switching time from the terminal device, wherein the switching time is a switching time between receiving the reference signal based on the third bandwidth and receiving the reference signal based on the fourth bandwidth by the terminal device, wherein
the switching time comprises a third switching time and/or a fourth switching time, the third switching time is a switching time in which the terminal device switches from receiving the reference signal based on the third bandwidth to receiving the reference signal based on the fourth bandwidth, and the fourth switching time is a switching time in which the terminal device switches from receiving the reference signal based on the fourth bandwidth to receiving the reference signal based on the third bandwidth.

62. The apparatus according to any one of claims 59 to 61, wherein the communication unit is further configured to:
send sixth information to a network device, wherein the sixth information is used to request the network device to report third reference signal resource configuration information;
receive the third reference signal resource configuration information from the network device, wherein the third reference signal resource configuration information indicates the terminal device to receive the reference signal based on the third bandwidth and/or the fourth bandwidth; and
send the third reference signal resource configuration information to the terminal device.

63. A communication apparatus, comprising a logic circuit and a communication interface, wherein the communication apparatus is configured to perform the method according to any one of claims 1 to 6, or configured to perform the method according to any one of claims 7 to 13, or configured to perform the method according to any one of claims 14 to 18, or configured to perform the method according to any one of claims 19 to 23, or configured to perform the method according to any one of claims 24 to 27, or configured to perform the method according to any one of claims 28 to 31.

64. A communication apparatus, comprising a processor and a transceiver, wherein the communication apparatus is configured to perform the method according to any one of claims 1 to 6, or configured to perform the method according to any one of claims 7 to 13, or configured to perform the method according to any one of claims 14 to 18, or configured to perform the method according to any one of claims 19 to 23, or configured to perform the method according to any one of claims 24 to 27, or configured to perform the method according to any one of claims 28 to 31.

65. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 6, or configured to perform the method according to any one of claims 7 to 13, or configured to perform the method according to any one of claims 14 to 18, or configured to perform the method according to any one of claims 19 to 23, or configured to perform the method according to any one of claims 24 to 27, or configured to perform the method according to any one of claims 28 to 31.

66. A computer program product, wherein when the computer program product runs on an electronic apparatus, the electronic apparatus is enabled to perform the method according to any one of claims 1 to 6, or configured to perform the method according to any one of claims 7 to 13, or configured to perform the method according to any one of claims 14 to 18, or configured to perform the method according to any one of claims 19 to 23, or configured to perform the method according to any one of claims 24 to 27, or configured to perform the method according to any one of claims 28 to 31.
